# EUROPEAN PATENT APPLICATION

(11) **EP 4 773 682 A1**
(43) Date of publication of application: **08.07.2026**
(21) Application number: 24859142.2
(22) Date of filing: 01.07.2024
(51) Int. Cl.: H04W 52/02, H04W 16/18, H04W 24/10, H04W 76/28, H04W 88/02

(54) **WIRELESS TERMINAL, RADIO ACCESS NETWORK NODE, AND METHOD THEREFOR**

(30) Priority: 30.08.2023 JP 2023139771
(71) Applicant: NEC Corporation, 108-8001 Tokyo (JP)
(72) Inventor: FUTAKI Hisashi, Tokyo 108-8001 (JP)
(74) Representative: Mathys & Squire
(86) International application number: PCT/JP2024/023713
(87) International publication number: WO 2025/047097

(57) **Abstract**

A radio terminal includes a main transceiver and a low-power wake-up receiver. The radio terminal records Minimization of Drive Tests (MDT) measurement results, including measurement results of a low-power wake-up-related signal obtained using the low-power wake-up receiver, at least while the main transceiver is in an ultra-deep sleep power state. For example, this may help resolve a problem related to the implementation of a low-power mechanism using a low-power wake-up signal (LP-WUS) and a low-power wake-up receiver (LP-WUR).

## Description

### Technical Field

The present disclosure relates to radio communication systems.

### Background Art

The 3rd Generation Partnership Project (3GPP (registered trademark)) studies ultra-low power mechanisms or solutions that can improve the energy efficiency of User Equipments (UEs) and support low latency for Release 18 and subsequent releases (see, for example, Non-Patent Literature 1-15). These mechanisms aim to achieve substantial gains compared to the UE power-saving mechanisms introduced in 3GPP Releases 15, 16, and 17.

As described in Non-Patent Literature 1, currently, while a UE is in the Radio Resource Control (RRC)_IDLE or RRC_INACTIVE state, the UE needs to wake up periodically once per Discontinuous Reception (DRX) cycle (i.e., paging cycle). Specifically, a UE needs to periodically monitor for a Paging Occasion (PO) or a Paging Early Indication (PEI) Occasion once per DRX or paging cycle. This operation dominates the power consumption of a UE in the RRC_IDLE or RRC_INACTIVE state in periods with no signaling or data traffic. If a UE is able to wake up only if it is triggered, such as by paging, power consumption could be dramatically reduced. To achieve this, the low-power mechanism under consideration uses a wake-up signal that triggers the Main Radio (MR) and a receiver with the capability to monitor the wake-up signal with ultra-low power consumption.

The wake-up signal under consideration is referred to, for example, as the Low Power (LP) Wake-Up Signal (WUS) (LP-WUS). A low-power receiver separate from the MR and capable of monitoring the LP-WUS is referred to, for example, as a Low Power (LP) Wake-Up Receiver (LP-WUR), or abbreviated as LR. The MR is a transceiver (transmit and receive module) for receiving NR signals and channels, operates for data transmission and reception, and can be turned off or set to deep sleep unless it is turned on. To distinguish it from the sleep state and deep sleep state during DRX in the RRC_IDLE and INACTIVE states supported by current UEs, the deep sleep state achieved by using the LP-WUS and LP-WUR is referred to, for example, as the ultra-deep sleep state. The deep sleep state supported by current UEs is achieved through the PEI mechanism introduced in 3GPP Release 17.

Non-Patent Literature 2 describes study items regarding LP-WUS and LP-WUR, including receiver architectures for LP-WUR, signal design for LP-WUS, and Layer-1 (L1) procedures related to LP-WUS. LP-WUS-related L1 procedures include Radio Resource Management (RRM) measurements in RRC_IDLE, INACTIVE, and RRC_CONNECTED states; LP-WUR synchronization; LP-WUS monitoring; activation and deactivation procedures of LP-WUS; and LP-WUS coverage-related procedures.

Regarding the LP-WUS signal design, candidate LP-WUS content for the RRC_IDLE and INACTIVE states includes information about which user(s) is/are targeted by the LP-WUS (e.g., UE-group, UE-subgroup, or UE-ID). Additionally, the candidate LP-WUS content includes cell information, tracking area information, Radio Access Network (RAN) area information, System Information (SI) change indication, and Earthquake and Tsunami Warning System (ETWS)/Commercial Mobile Alert System (CMAS) information.

Regarding RRM measurements in the RRC_IDLE and INACTIVE states, the 3GPP will study the feasibility of performing RRM measurements performed by the LP-WUR for at least the serving or camping cell, based on signals detected by the LP-WUR.

Regarding the synchronization of LP-WUR, there are multiple options for a synchronization signal used by LP-WUR, including an aperiodic signal transmitted as part of LP-WUS, a periodic signal transmitted separately from LP-WUS, and combinations thereof. The synchronization or reference signal for LP-WUR synchronization and for L1 measurements is referred to as the LP Synchronization Signal (LP-SS) or LP Reference Signal (LP-RS).

Regarding LP-WUS coverage-related procedures, the 3GPP will study a fallback mechanism whereby the MR switches to legacy operation in case the channel condition of LP-WUS is not sufficient (e.g., falls below a threshold).

Non-Patent Literature 3-13 are contributions submitted to a recent meeting of the 3GPP Technical Specification Group (TSG) Radio Access Network (RAN) Working Group #2 (WG2) (RAN2). Non-Patent Literature 3 states that since LP-WUR works with a waveform different from those for MR, a separate reference signal receivable by LP-WUR, namely LP-RS, needs to be used for RRM measurement by LP-WUR. Non-Patent Literature 3 proposes that studies be conducted to determine which types of RRM measurements, such as serving cell, intra-frequency, and inter-frequency, may be performed by the UE using LP-WUR.

Additionally, Non-Patent Literature 3 proposes studies be conducted regarding options for the UE to use RRM measured values from the LP-WUR alongside legacy measured values during the cell reselection procedure. Specifically, even if the UE can use LP-WUR to perform RRM measurements, it is possible that not all measurements are performed by the LP-WUR. For example, if a neighbor cell does not transmit LP-RS (or LP-SS), measurements for those cells have to be performed by MR (i.e., legacy measurements). Since the UE needs to compare signal strengths of receivable neighbor cells to that of the serving cell during cell reselection, it needs to be studied how the UE may use two different types of RRM measurements to perform cell ranking. From RAN2 perspective, it is desirable that there be some kind of "mapping" which translates RRM measurements from LP-WUR to the scale of legacy RRM measurements. Such a mapping could be either an offset predefined in the specification or a semi-static parameter that can be periodically calibrated based on measurements. If such a mapping is possible, it would enable compatible and reliable comparisons between measured values from LP-WUR and MR.

Non-Patent Literature 4 states that different mechanisms need to be studied depending on whether LP-WUS has full coverage or partial coverage. Full coverage means that the LP-WUS coverage is the same or comparable to the coverage of the existing reference signal (i.e., Secondary Synchronization Signal (SSS), or Synchronization Signal (SS)/Physical Broadcast Channel (PBCH) block (SSB)). Partial coverage means that the LP-WUS coverage is smaller than the coverage of the existing reference signal. Partial coverage may also be referred to as different coverage or coverage mismatch. In the case of full coverage of LP-WUS, LP-WUS could be continuously available while the UE moves across cells. In this case, the UE's MR could potentially remain in ultra-deep sleep during mobility in the RRC_IDLE or RRC_INACTIVE states. Non-Patent Literature 4 suggests studying whether LP-WUS/SS-based measurements can be used to perform cell reselection to ensure the UE's MR stays in ultra-deep sleep for as long as possible. On the other hand, in the case of partial coverage of LP-WUS, the UE will be out of LP-WUS coverage as it moves across cells. In this case, the UE's MR needs to wake up during mobility. Non-Patent Literature 4 suggests studying whether the network needs to know exact information about the MR power state (i.e., whether it is in ultra-deep sleep) of a UE, and how the network can know this.

Non-Patent Literature 10 proposes two methods for activating and deactivating LP-WUS in an LP-WUS-capable UE. In one method, the gNB can instruct an LP-WUS-capable UE, via an RRC Release message, to transition to ultra-deep sleep mode or power state and activate monitoring of common, grouped, or dedicated LP-WUS. Upon receiving this message, the UE's MR immediately transitions to ultra-deep sleep mode, and the UE's LR starts to monitor the corresponding LP-WUS. The gNB can wake up the UE's MR by transmitting the corresponding LP-WUS. In the other method, the gNB can activate the common or grouped LP-WUS configuration via a System Information Block (SIB). If a SIB broadcasts the LP-WUS configuration, the MR of an LP-WUS-capable UE enters ultra-deep sleep mode while the UE is in the RRC_IDLE or RRC_INACTIVE state. The gNB transmits LP-WUS to wake up an LP-WUS-capable UE.

Non-Patent Literature 11 discloses the following regarding mobility in LP-WUS full coverage. When a UE moves between NR cells, it may stay in LP-WUS coverage. For the maximum amount of power saving, the UE needs to rely on LR, while it stops or skips MR procedures as much as possible. In the ideal procedure, the UE stays in LR mode and turns off MR as long as the LP-WUS signal strength exceeds a threshold for LR mobility. This assumes that the UE can evaluate the LP-WUS signal strength of the serving cell and neighbor cells, and can operate in LR mode even after cell change. However, according to discussions in the 3GPP RTSG RAN WG1 (RAN1), RAN1 is currently more focused on offloading RRM measurements for the serving or camping cell to LR, while keeping RRM measurements for neighbor cells on MR. From RAN2 perspective, the following two Access Stratum (AS) criteria can be supported for LR mobility. One criterion assumes that LP-WUS can be used for RRM of the serving cell and neighbor cells; if the LP-WUS signal strength is above a threshold (e.g., thresholdMob), the UE stays in LR mode. If the LP-WUS can provide information to make sure the UE can operate in LR mode after cell changes, the UE does not need to resume legacy procedures on MR. The other criterion assumes that LP-WUS can be used for RRM of the serving cell but not for RRM of neighbor cells; If the LP-WUS signal strength falls below a threshold (e.g., thresholdMob), the UE starts RRM measurement by MR, while LR continues LP-WUS reception for paging and other purposes. The MR performs cell reselection based on RRM measurements.

Non-Patent Literature 12 describes RRM measurements for IDLE/INACTIVE mobility under LP-WUS full and partial coverage. When a UE in the RRC_IDLE or RRC_INACTIVE state is in ultra-deep sleep state, it can perform a serving cell measurement based on an LP-WUS signal (e.g., LP-SS or LP-RS). In the case of LP-WUS partial coverage, if the signal quality of the LP-WUS signal deteriorates (e.g., falls below a threshold), the UE can assume that it cannot work well only based on the LP-WUS signal in the ultra-deep sleep state, but it cannot assume that the serving cell's quality is poor. Thus, the UE should leave the ultra-deep sleep state and perform the legacy RRM measurement based on the serving cell's SSB using MR. Then, in the normal state, if the serving cell's quality based on SSB measurement is below a threshold, the UE starts SSB measurement of neighbor cells. In contrast, in the case of LP-WUS full coverage, if the LP-WUS signal quality is below a threshold, the UE assumes the current serving cell's quality is poor, and leaves the ultra-deep sleep state to perform legacy RRM measurements based on the SSB of the serving cell and neighbor cells using MR.

Non-Patent Literature 13 discloses the following regarding mobility and RRM measurements using LP-WUR. There are three solutions for RRM measurement during LP-WUR operation. In the first solution, LP-WUR performs legacy SSB measurements (MR does not perform SSB measurements). In the second solution, LP-WUR performs measurements of a newly defined LP-WUR-specific reference signal (LP-SS). In the third solution, MR performs measurements of the legacy SSB (LP-WUR does not perform SSB measurements). To avoid the network overhead and increased power consumption associated with the second solution, and to avoid the significant reduction in power savings gain caused by the third solution, Non-Patent Literature 13 proposes studying the adoption of the first solution, namely RRM measurement by LP-WUR using SSB.

Non-Patent Literature 15 describes a unified solution for cell reselection considering both LP-WUS full coverage and partial coverage scenarios. Non-Patent Literature 15 is an update to Non-Patent Literature 11 and includes the following disclosure. If the LP-WUS coverage is smaller than that of the NR cell, it is practical to rely on MR to perform the legacy cell reselection procedure. However, the issue is when to start RRM measurement by MR. This is because if MR starts measuring neighbor cells after the UE leaves the LP-WUS coverage, it will be too late when the UE is moving fast and the NR cell coverage is not much larger than the LP-WUS coverage, resulting in degraded mobility performance. Thus, a separate threshold (e.g., thresholdMob) for the LP-WUS signal strength for cell reselection can be introduced, which can be smaller than a threshold for fallback purposes. On the other hand, if the LP-WUS coverage is comparable to that of the NR cell, the question arises whether the UE needs to wake up MR for cell reselection even when it is in the LP-WUS coverage area. The ideal procedure is for the UE to stay in LR mode and keep its MR off as long as the LP-WUS signal strength is above a threshold. This assumes that the UE can evaluate the LP-WUS signal strength of both the serving cell and neighbor cells, and can work in LR mode even after cell changes. From RAN2 perspective, the following two Access Stratum (AS) criteria can be supported for LR mobility. One criterion assumes that LP-WUS can be used for RRM of the serving cell and neighbor cells; As long as the LP-WUS signal strength is above a threshold (e.g., thresholdMob), the UE can stay in LR mode and does not need to resume legacy procedures on MR. In other words, if the LP-WUS can provide information to make sure the UE can operate in LR mode after cell changes, the UE can use LR to perform cell reselection. The other criterion assumes that LP-WUS can be used for RRM of the serving cell but not for RRM of neighbor cells; If the LP-WUS signal strength falls below a threshold (e.g., thresholdMob), the UE starts RRM measurement by MR, while LR continues LP-WUS reception for paging and other purposes. The MR performs cell reselection based on RRM measurements.

### Citation List

### Non Patent Literature

[Non-Patent Literature1] vivo, "Revised SID: Study on low-power Wake-up Signal and Receiver for NR", RP-222644, 3GPP TSG RAN meeting #97e, Electronic Meeting, September 12-16, 2022
[Non-Patent Literature2] 3GPP TR 38.869 V0.2.0 (2023-05), "3rd Generation Partnership Project; Technical Specification Group Radio Access Network; Study on low-power wake up signal and receiver for NR (Release 18)", May 2023
[Non-Patent Literature3] Qualcomm Incorporated, "Use of low-power receiver in idle mode procedures", R2-2304714, 3GPP TSG-RAN WG2 Meeting #122, Incheon, Korea, May 22-26, 2023
[Non-Patent Literature4] vivo, "Discussion on LP-WUS/WUR in RRC_IDLE/INACTIVE", R2-2304923, 3GPP TSG-RAN WG2 Meeting #122, Incheon, Korea, May 22-26, 2023
[Non-Patent Literature5] NEC, "Discussion on the considerations for LPWUS in RRC_IDLE INACTIVE", R2-2304988, 3GPP TSG-RAN WG2 Meeting #122, Incheon, Korea, May 22-26, 2023
[Non-Patent Literature6] Xiaomi Communications, "General considerations on the procedure for RRC_IDLE_INACTIVE", R2-2305000, 3GPP TSG-RAN WG2 Meeting #122, Incheon, Korea, May 22-26, 2023
[Non-Patent Literature7] Sony, "Considerations on LP-WUR in RRC Idle/Inactive mode", R2-2305528, 3GPP TSG-RAN WG2 Meeting #122, Incheon, Korea, May 22-26, 2023
[Non-Patent Literature8] vivo, "Updated scope clarification of Rel-18 SI on LP-WUS/WUR", R2-2305745, 3GPP TSG-RAN WG2 Meeting #122, Incheon, Korea, May 22-26, 2023
[Non-Patent Literature9] vivo, "Work Plan for Rel-18 SI on LP-WUS/WUR", R2-2305746, 3GPP TSG-RAN WG2 Meeting #122, Incheon, Korea, May 22-26, 2023
[Non-Patent Literature10] ZTE Corporation, Sanechips, "RAN2 impacts of LP-WUS in idle or inactive mode", R2-2305960, 3GPP TSG-RAN WG2 Meeting #122, Incheon, Korea, May 22-26, 2023
[Non-Patent Literature11] Huawei, HiSilicon, "MR/LR UE behaviours for paging and mobility in RRC_IDLE/INACTIVE state", R2-2306060, 3GPP TSG-RAN WG2 Meeting #122, Incheon, Korea, May 22-26, 2023
[Non-Patent Literature12] Apple, "RAN2 impact on LP-WUS in IDLE/INACTIVE state", R2-2306162, 3GPP TSG-RAN WG2 Meeting #122, Incheon, Korea, May 22-26, 2023
[Non-Patent Literature13] Ericsson, "LP-WUS/WUR for RRC Idle and Inactive", R2-2306238, 3GPP TSG-RAN WG2 Meeting #122, Incheon, Korea, May 22-26, 2023
[Non-Patent Literature14] NEC, "Low-power Wake-up Signal and Receiver for NR", RWS-230144, 3GPP TSG RAN Rel-19 workshop, Taipei, June 15-16, 2023
[Non-Patent Literature15] Huawei, HiSilicon, "MR/LR UE behaviours for paging and mobility in RRC_IDLE/INACTIVE state", R2-2307453, 3GPP TSG-RAN WG2 Meeting #123, Toulouse, France, August 21-25, 2023

### Summary of Invention

### Technical Problem

The Inventor has studied low-power mechanisms using LP-WUS and LP-WUR and identified various issues. Some of these issues relate to the execution of specific procedures and operations by UEs supporting LP-WUS and LP-WUR. These specific procedures and operations include procedures and operations related to Minimization of Drive Tests (MDT), Small Data Transmission (SDT), and network slicing. For example, Non-Patent Literature 1-14 does not teach how MDT, SDT, and network slicing-related procedures and operations need to be adapted or modified in the case of UEs using LP-WUS and LP-WUR.

One of the objectives to be achieved by the example embodiments disclosed herein is to provide apparatuses, methods, and programs that contribute to solving at least one of a plurality of problems related to the realization of a low-power mechanism using LP-WUS and LP-WUR, including the problems described above. It should be noted that this objective is only one of the objectives to be achieved by the example embodiments disclosed herein. Other objectives or problems and novel features will become apparent from the following description and the accompanying drawings.

### Solution to Problem

In a first aspect, a radio terminal includes a main transceiver and a low-power wake-up receiver. Additionally, the radio terminal is configured to record MDT measurement results, including measurement results of a low-power wake-up-related signal obtained using the low-power wake-up receiver, at least while the main transceiver is in an ultra-deep sleep power state.

In a second aspect, a method performed by a radio terminal includes recording MDT measurement results, including measurement results of a low-power wake-up-related signal obtained using a low-power wake-up receiver, at least while a main transceiver is in an ultra-deep sleep power state.

In a third aspect, a radio access network (RAN) node is configured to transmit to a radio terminal an MDT measurement configuration including a configuration or indication of measurement logging of a low-power wake-up-related signal.

In a fourth aspect, a method performed by a RAN node includes transmitting to a radio terminal an MDT measurement configuration including a configuration or indication of measurement logging of a low-power wake-up-related signal.

In a fifth aspect, a radio terminal includes a main transceiver and a low-power wake-up receiver. Additionally, the radio terminal is configured to store measurement results for IDLE/INACTIVE measurement reporting, including measurement results of a low-power wake-up-related signal obtained using the low-power wake-up receiver, at least while the main transceiver is in an ultra-deep sleep power state.

In a sixth aspect, a method performed by a radio terminal includes storing measurement results for IDLE/INACTIVE measurement reporting, including measurement results of a low-power wake-up-related signal obtained using a low-power wake-up receiver, at least while a main transceiver is in an ultra-deep sleep power state.

In a seventh aspect, a RAN node is configured to transmit information to a radio terminal indicating that IDLE/INACTIVE measurements include measurements of a low-power wake-up-related signal.

In an eighth aspect, a method performed by a RAN node includes transmitting information to a radio terminal indicating that IDLE/INACTIVE measurements include measurements of a low-power wake-up-related signal.

In a ninth aspect, a radio terminal includes a main transceiver and a low-power wake-up receiver. Additionally, the radio terminal is configured to perform an SDT procedure using the main transceiver that has woken up from an ultra-deep sleep power state, by skipping a comparison of a first measured value obtained from an SSB measurement with a first threshold.

In a tenth aspect, a method performed by a radio terminal equipped with a main transceiver and a low-power wake-up receiver includes performing an SDT procedure using the main transceiver that has woken up from an ultra-deep sleep power state, by skipping a comparison of a first measured value obtained from an SSB measurement with a first threshold.

In an eleventh aspect, a RAN node is configured to transmit, to a radio terminal, configuration information indicating that a comparison of a first measured value obtained from an SSB measurement with a first threshold is to be skipped in determining whether a condition for initiating an SDT procedure is satisfied.

In a twelfth aspect, a method performed by a RAN node includes transmitting, to a radio terminal, configuration information indicating that a comparison of a first measured value obtained from an SSB measurement with a first threshold is to be skipped in determining whether a condition for initiating an SDT procedure is satisfied.

In a thirteenth aspect, a radio terminal includes a main transceiver and a low-power wake-up receiver. Additionally, the radio terminal is configured to attempt to measure or detect a low-power wake-up-related signal of a neighbor cell supporting an intended network slice, if quality of a low-power wake-up-related signal in a serving cell, or in a serving cell frequency, measured using the low]-power wake-up receiver deteriorates while the main transceiver is in an ultra-deep sleep power state.

In a fourteenth aspect, a method performed by a radio terminal equipped with a main transceiver and a low-power wake-up receiver includes attempting to measure or detect a low-power wake-up-related signal of a neighbor cell supporting an intended network slice, if quality of a low-power wake-up-related signal in a serving cell, or in a serving cell frequency, measured using the low-power wake-up receiver deteriorates while the main transceiver is in an ultra-deep sleep power state.

In a fifteenth aspect, a radio terminal includes a main transceiver and a low-power wake-up receiver. Additionally, the radio terminal is configured to, if there is a frequency with higher priority in cell reselection than a serving cell frequency, attempt to measure or detect a low-power wake-up-related signal of a neighbor cell supporting an intended network slice, in the higher-priority frequency, using the low-power wake-up receiver, while the main transceiver is in an ultra-deep sleep power state.

In a sixteenth aspect, a method performed by a radio terminal equipped with a main transceiver and a low-power wake-up receiver includes, if there is a frequency with higher priority in cell reselection than a serving cell frequency, attempting to measure or detect a low-power wake-up-related signal of a neighbor cell supporting an intended network slice, in the higher-priority frequency, using the low-power wake-up receiver, while the main transceiver is in an ultra-deep sleep power state.

In a seventeenth aspect, a program includes a set of instructions (software code) that, if loaded into a computer, causes the computer to perform a method related to any of the aforementioned aspects.

### Advantageous Effects of Invention

According to the aspects described above, it is possible to provide apparatuses, methods, and programs that contribute to solving at least one of a plurality of problems related to the realization of a low-power mechanism using LP-WUS and LP-WUR.

### Brief Description of Drawings

Fig. 1 is a diagram showing an example configuration of a radio communication system related to one or more example embodiments.
Fig. 2 is a diagram showing an example of paging for a UE in an ultra-deep sleep power state, related to one or more example embodiments.
Fig. 3 is a diagram showing an example of cell reselection using LP-WUR related to one or more example embodiments.
Fig. 4 is a flowchart showing an example of the operation of a UE related to one or more example embodiments.
Fig. 5 is a sequence diagram showing an example of the operation of a UE and a gNB related to one or more example embodiments.
Fig. 6 shows an example of the format of a LoggedMeasurementConfiguration message related to one or more example embodiments.
Fig. 7 shows an example of the format of a UEInformationResponse message related to one or more example embodiments.
Fig. 8 is a flowchart showing an example of the operation of a UE related to one or more example embodiments.
Fig. 9 is a sequence diagram showing an example of the operation of a UE and a gNB related to one or more example embodiments.
Fig. 10 shows an example of the format of a SIB1 message related to one or more example embodiments.
Fig. 11 shows an example of the format of a MeasIdleConfig information element related to one or more example embodiments.
Fig. 12 is a flowchart showing an example of the operation of a UE related to one or more example embodiments.
Fig. 13 is a flowchart showing an example of the operation of a UE related to one or more example embodiments.
Fig. 14 is a sequence diagram showing an example of the operation of a UE and a gNB related to one or more example embodiments.
Fig. 15 is a sequence diagram showing an example of the operation of a UE and a gNB related to one or more example embodiments.
Fig. 16 is a sequence diagram showing an example of the operation of a UE and a gNB related to one or more example embodiments.
Fig. 17 shows an example of the format of a SIB1 message related to one or more example embodiments.
Fig. 18 shows an example of the format of an RRCRelease message related to one or more example embodiments.
Fig. 19 is a flowchart showing an example of the operation of a UE related to one or more example embodiments.
Fig. 20 is a flowchart showing an example of the operation of a UE related to one or more example embodiments.
Fig. 21 is a block diagram showing an example configuration of a UE related to one or more example embodiments.
Fig. 22 is a block diagram showing an example configuration of a gNB related to one or more example embodiments.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The multiple example embodiments described below may be used individually or in any suitable combination of two or more. These multiple example embodiments may possess distinct novel features. Consequently, these multiple example embodiments may contribute to achieving different objectives, solving different problems and providing different benefits.

Each of the drawings or figures is merely an example to illustrate one or more example embodiments. Each figure may not be associated with only one particular example embodiment but may be associated with one or more other example embodiments. As will be appreciated by those of ordinary skill in the art, various features or steps described with respect to any one of the figures may be combined with features or steps illustrated in one or more other figures to produce, for example, example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

The following example embodiments are primarily described in the context of the 3GPP fifth generation mobile communication system (5G system). However, these example embodiments may also be applied to other radio communication systems that support technologies similar to 3GPP low-power mechanisms using LP-WUS and LP-WUR.

As used in this specification, "if" can be interpreted to mean "when", "while", "at or around the time", "after", "upon", "in response to determining", "in accordance with a determination", or "in response to detecting", depending on the context. These expressions can be interpreted to mean the same thing, depending on the context.

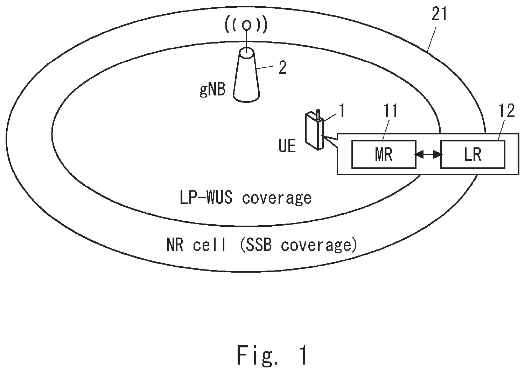

First, the configuration and operation of a plurality of network elements common to a plurality of example embodiments are described. Fig. 1 shows an example configuration of a radio communication system related to a plurality of example embodiments. Each element shown in Fig. 1 is a network function, providing an interface defined by the 3GPP, for example. Each element (or network function) shown in Fig. 1 can be implemented, for example, as a network element on dedicated hardware, as a software instance running on dedicated hardware, or as a virtualized function instantiated on an application platform.

The radio communication system shown in Fig. 1 includes a UE 1 and a gNB 2. The UE 1 may be referred to by other terms, such as a radio terminal, a mobile terminal, a mobile station, or a wireless transmit receive unit (WTRU). The gNB 2 may be referred to as a radio access network (RAN) node, base station, radio station, or access point. The gNB 2 may be a combination of a gNB-Central Unit (gNB-CU) and one or more gNB-Distributed Units (gNB-DUs) in a cloud RAN (C-RAN) deployment. C-RAN is also referred to as a CU/DU split. Additionally, the gNB-CU may include a Control Plane (CP) Unit (i.e., gNB-CU-CP) and one or more User Plane (UP) Units (i.e., gNB-CU-UPs).

The UE 1 and the gNB 2 support a low-power mechanism using a low-power wake-up signal (LP-WUS) and a low-power wake-up receiver (LP-WUR). The UE 1 is equipped with a main radio (MR) 11 and an LP-WUR (LR) 12. The MR 11 may be referred to as the main transceiver, or simply as the transceiver (relative to the LR). The MR 11 is a transceiver (i.e., transmit and receive module) for receiving NR signals and channels. NR signals and channels include the Sounding Reference Signal (SRS), the Physical Random Access Channel (PRACH) preamble, the Physical Uplink Control Channel (PUCCH), the Physical Uplink Shared Channel (PUSCH), the Reference Signal (RS), the Synchronisation Signal (SS), the Physical Broadcast Channel (PBCH), the Physical Downlink Control Channel (PDCCH) and the Physical Downlink Shared Channel (PDSCH). The MR 11 may operate for signal transmission and reception, including SRS transmission, PRACH preamble transmission, PUCCH transmission, PUSCH transmission, RS reception, SS reception, PBCH reception (or reception of SSB combining SS and PBCH), PDCCH reception, and PDSCH reception.

The MR 11 can be turned off or set to a deep sleep power state or mode unless it is turned on. As previously explained, the deep sleep state of the MR 11 achieved through the use of LP-WUS and the LR 12 may be referred to as the ultra-deep sleep state, ultra-deep sleep power state, or ultra-deep sleep mode to distinguish it from the deep sleep state (achieved via the PEI mechanism) during DRX in the RRC_IDLE and INACTIVE states in 3GPP Release 17. Instead, the deep sleep state of the MR 11 may be referred to as an ultra-low power state, ultra-power saving state, or ultra-power saving mode. Alternatively, it may be referred to as an improved (or enhanced) low power state, power saving state, or power saving mode. It may be specified that while the UE 1 or the MR 11 is in this state or mode, the UE 1 remains in the RRC_IDLE or INACTIVE state and suspends the operation of the MR 11 (e.g., execution of transmission and reception processing). Instead, it may be specified that while the UE 1 or the MR 11 is in this state or mode, the UE 1 is in a new RRC state (e.g., RRC_OFF, RRC_SUSPEND, RRC_SUSPENDED, or RRC_SLEEP). In the ultra-deep sleep power state, RRM measurements of the serving cell via the MR 11 may be relaxed, which may mean not performing the measurements. In the ultra-deep sleep power state, RRM measurements of neighbor cells via the MR 11 may be relaxed, which may mean not performing the measurements.

The LR 12 is provided separately from the MR 11 and is capable of monitoring LP-WUS transmitted from the gNB 2. The gNB 2 is capable of transmitting LP-WUS to trigger the wake-up of UE 1's MR 11 from the ultra-deep sleep power state. In response to the reception by the LR 12 of LP-WUS associated with the UE 1 or a UE group or subgroup to which the UE 1 belongs, the UE 1 wakes up the MR 11 from the ultra-deep sleep power state. Waking up the MR 11 may be referred to, for example, as starting the MR 11, turning the MR 11 on, or resuming the operation of the MR 11 (e.g., executing transmission and reception processing).

The UE 1 may activate the LR 12 and transition the MR 11 to the ultra-deep sleep power state in response to receiving an instruction from the gNB 2 via a RRC message dedicated to the UE 1 (e.g., a RRC Release message). The gNB 2 may instruct the UE 1, via a dedicated RRC message, to transition to the ultra-deep sleep power state and activate monitoring of common, grouped, or dedicated LP-WUS. Upon receiving this message, the MR 11 of the UE 1 may transition to the ultra-deep sleep power state, and the LR 12 of the UE 1 may start monitoring the corresponding LP-WUS. The gNB 2 can wake up the MR 11 of the UE 1 by transmitting the corresponding LP-WUS in an NR cell 21.

In another method, the gNB 2 may send information to the UE 1 regarding a condition for the UE 1 to transition to the ultra-deep sleep power state via a dedicated RRC message. Upon confirming that the condition is met, the UE 1 may transition to the ultra-deep sleep power state. The condition may be that the received quality (e.g., Reference Signal Received Power (RSRP), Reference Signal Received Quality (RSRQ), or Received Signal Strength Indicator (RSSI)) of a given signal (e.g., SSB, Channel State Information Reference Signal (CSI-RS)) of the serving cell is greater than (or equal to or greater than) a predetermined threshold. The gNB 2 may transmit the threshold to the UE 1 as information regarding the condition.

In yet another method, the gNB 2 may activate a common or grouped LP-WUS configuration via common system information in the cell. The system information may be a Master Information Block (MIB) or any SIB (e.g., SIB type 1 (SIB1) or SIB type 2 (SIB2)). If the SIB broadcast in the cell 21 contains the LP-WUS configuration, the MR 11 of the UE 1 may enter the ultra-deep sleep power state while the UE 1 is in the RRC_IDLE or RRC_INACTIVE state. Additionally, the LP-WUS configuration may include information about a condition for the UE 1 to transition to the ultra-deep sleep power state. Upon confirmation that this condition is met, the UE 1 may transition to the ultra-deep sleep power state. The gNB may transmit LP-WUS in the cell 21 to wake up the UE 1.

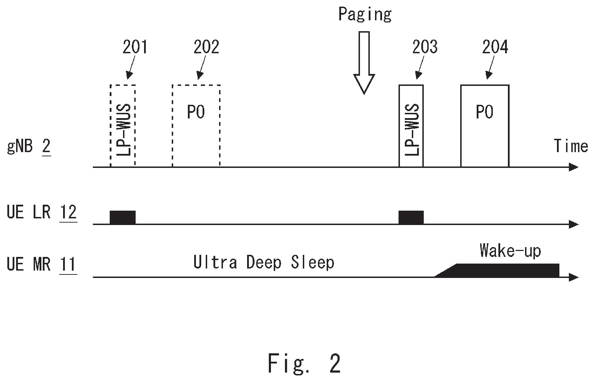

Fig. 2 shows an example of paging while the MR 11 of the UE 1 is in the ultra-deep sleep power state. At this time, the UE 1 is in the RRC_IDLE or RRC_INACTIVE state. the LR 12 of the UE 1 periodically tries to monitor an LP-WUS. In an LP-WUS monitoring occasion 201, no LP-WUS is sent or no LP-WUS identifying the UE 1 or a UE group to which the UE 1 belongs is sent. Accordingly, the UE 1 does not need to attempt paging reception at the corresponding paging occasion 202 of the LP-WUS monitoring occasion 201, and the MR 11 can remain in the ultra-deep sleep power state. Next, in response to receiving a paging addressed to the UE 1 from a control node (e.g., Access and Mobility Management Function (AMF)) in the core network, the gNB 2 sends an LP-WUS identifying the UE 1 or the UE group to which the UE 1 belongs, in an LP-WUS monitoring occasion 203. In response to the LR 12 receiving the LP-WUS at the LP-WUS monitoring occasion 203, the UE 1 immediately wakes up the MR 11. The MR 11 then attempts to receive paging in a paging occasion 204. Specifically, the MR 11 receives a PDCCH carrying paging Downlink Control Information (DCI) at the paging occasion 204 and receives a paging message on a PDSCH scheduled by the paging DCI. The MR 11 then performs the appropriate actions in response to the reception of the paging message. For example, if the paging message triggers RRC setup (or RRC resume), the MR 11 may initiate a random access procedure.

The LP-WUS transmitted by the gNB 2 in the cell 21 provides full coverage or partial coverage. LP-WUS full coverage means that the coverage of LP-WUS is comparable to or the same as the coverage of an existing reference signal (e.g., Primary Synchronization Signal (PSS), SSS, or SSB) in the NR cell 21. LP-WUS partial coverage, in contrast, means that the coverage of LP-WUS is smaller than the coverage of the existing reference signal (e.g., PSS, SSS, or SSB), as illustrated in Fig. 1. LP-WUS partial coverage may be referred to as differential coverage or coverage mismatch. Alternatively, full or partial coverage may be specified in terms of LP-SS instead of LP-WUS. In this case, LP-WUS full coverage or LP-SS full coverage means that the coverage of LP-SS is comparable to or the same as the coverage of the existing reference signal in the NR cell 21. In contrast, LP-WUS partial coverage or LP-SS partial coverage means that the coverage of LP-SS is smaller than the coverage of the existing reference signal. In the following, full or partial coverage of LP-WUS is used as an example, but it can be replaced by full or partial coverage of LP-SS in those examples.

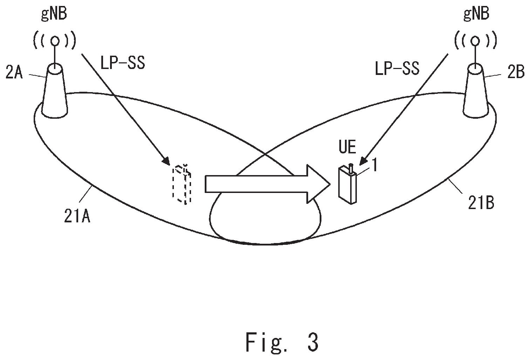

In the case of LP-WUS full coverage, LP-WUS or LP-SS may be continuously available while the UE 1 moves across cells. In this case, the MR 11 of the UE 1 may be able to remain in ultra-deep sleep during mobility in the RRC_IDLE or RRC_INACTIVE state. Fig. 3 shows an example of inter-cell mobility (i.e., cell reselection) of the UE 1 in the RRC_IDLE or RRC_INACTIVE state in the LP-WUS full coverage case. In the example in Fig. 3, while the UE 1 is in the RRC_IDLE or RRC_INACTIVE state, the UE 1 moves from a serving cell 21A provided by the gNB 2A to a neighbor cell 21B provided by the gNB 2B. The cells 21A and 21B may be served by the same gNB 2. For this inter-cell mobility or cell reselection, the UE 1 may use LP-WUS or LP-SS (or LP-RS) measurements of the serving cell 21A and neighbor cell 21B obtained using the LR 12. For example, the UE 1 may perform inter-cell mobility or cell reselection based on these LP-WUS or LP-SS (or LP-RS) measurements. For example, the UE 1 may perform inter-cell mobility or cell reselection based on measured values of these LP-WUS or LP-SS (or LP-RS). The UE 1 may use measured values of LP-WUS or LP-SS (or LP-RS) obtained using the LR 12 to evaluate a cell reselection criterion.

On the other hand, in the case of LP-WUS partial coverage, as the UE 1 moves from the cell 21 to another cell, the UE 1 will be out of the LP-WUS coverage of the cell 21. Accordingly, in this case, the UE 1 may wake up the MR 11 to perform mobility in the RRC_IDLE or RRC_INACTIVE state, i.e., for cell reselection. Alternatively, the LR 12 of UE 1 may provide the capability to measure at least part of the SSB (e.g., PSS, SSS), and the UE 1 may keep the MR 11 in ultra-deep sleep and use SSB measured values obtained by the LR 12 for cell reselection. These SSB measured values may be measured values for at least part of the SSB, or may be measured values obtained in the same way as existing SSB measurements.

For RRM measurements and cell reselection while the MR 11 is in the ultra-deep sleep power state, the UE 1 may operate as follows. In the first example, the UE 1 wakes up the MR 11 for cell reselection. Specifically, the UE 1 measures the received quality (e.g., signal strength, received power) of LP-WUS or LP-SS of the serving cell using the LR 12. The received quality of LP-WUS or LP-SS may be referred to as LP-RSSI, LP-RSRP, or LP-RSRQ, for example. If the measured value of LP-WUS or LP-SS of the serving cell meets a given condition (e.g., below a threshold value), the UE 1 wakes up the MR 11, and the received quality (e.g., signal strength, SS Reference Signal Received Power (SS-RSRP), SS Reference Signal Received Quality (SS-RSRQ)) of SSB of the serving cell and neighbor cells. The UE 1 evaluates a cell reselection criterion using the SSB measured values of the serving cell and neighbor cells.

In the second example, the UE 1 does not wake up the MR 11 for cell reselection, but evaluates a cell reselection criterion based on RRM measurement results obtained by the LR 12. Specifically, the UE 1 measures the received quality (e.g., signal strength, received power) of LP-WUS or LP-SS of the serving cell and neighbor cells using the LR 12. The UE 1 evaluates a cell reselection criterion using the measured values of LP-WUS or LP-SS of the serving cell and neighbor cells. In this case, the UE 1 may translate or map the LP-WUS or LP-SS measured values from the LR 12 to the scale of SSB measured values. Such translation or mapping may be either an offset predefined in the 3GPP specification or a semi-static parameter that can be periodically calibrated based on measurements. Additionally or alternatively, the translation or mapping may be done using an offset or parameter value transmitted from the gNB 2 to the UE 1 via an RRC message dedicated to the UE 1 or via system information (e.g., SIB) common to multiple UEs.

In the third example, as in the second example, the MR 11 is not woken up for cell reselection and a cell reselection criterion is evaluated based on RRM measurement results obtained by the LR 12. In the third example, however, the LR 12 is capable of measuring at least part of the SSB (e.g., PSS, SSS). The UE 1 measures the received quality (e.g., signal strength, received power) of LP-WUS or LP-SS of the serving cell using the LR 12. If the measured value of LP-WUS or LP-SS of the serving cell satisfies a given condition (e.g., it is below a threshold value), the UE 1 measures the receive quality (e.g., signal strength, SS-RSRP, SS-RSRQ) for at least part of SSB of the serving cell and neighbor cells using the LR 12. The UE 1 evaluates a cell reselection criterion using the SSB measured values of the serving cell and neighbor cells obtained by the LR 12.

### First Example Embodiment

This example embodiment relates to MDT. Example configurations of a radio communication system according to this example embodiment are similar to those described with reference to Figs. 1 to 3.

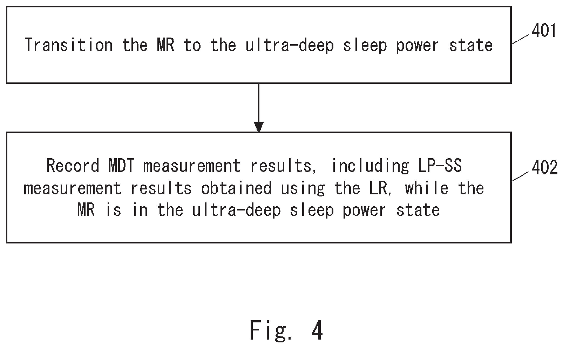

Fig. 4 shows an example of the operation of the UE 1. In step 401, the UE 1 transitions the MR 11 into the ultra-deep sleep power state. In step 402, at least while the MR 11 is in the ultra-deep sleep power state, the UE 1 records MDT measurement results containing measurement results of a low-power wake-up-related signal (e.g., LP-WUS, LP-SS, or both) obtained using the LR 12. The UE 1 performs the MDT measurement collection or logging in step 402 while the UE 1 is in the RRC_IDLE or INACTIVE state. Thus, the MDT measurement collection or logging in step 402 relates to Logged MDT.

The measurement results (measurement log) of Logged MDT in step 402 may include: a measured value (e.g., signal strength, received power) of LP-WUS/LP-SS; timestamp information associated with the measured value; and one or both of location information associated with the measured value and other information usable to derive the location information. The location information may include a cell identifier of the serving cell (e.g., NR Cell Global Identity (ECGI) or NR Cell Identity (NCI)), or Global Navigation Satellite Systems (GNSS) location information. Other information available to derive the location information may include sensor information (e.g., barometric measurement information) or Radio Frequency (RF) fingerprint (e.g., neighbor cell measurement information).

The operation described with reference to Fig. 4 enables the UE 1 to record MDT measurement results containing measurement results of a low-power wake-up-related signal (e.g., LP-WUS, LP-SS, or both). This helps enhance MDT measurement logging by UEs supporting the low-power mechanism using LP-WUS and LP-WUR.

The UE 1 may collect results of measurements of a low-power wake-up-related signal (e.g., LP-WUS, LP-SS, or both) using the LR 12 for MDT purposes, even while the MR 11 is awake and operating. This allows the network to know in detail the LP-WUS coverage situation.

If the LR 12 is capable of measuring at least a part of SSB (e.g., SSS), the UE 1 may collect or record SSB measurement results for Logged MDT purposes, instead of or in addition to LP-WUS/LP-SS measurement results. The UE 1 may collect or record LP-WUS/LP-SS measurement results and SSB measurement results for Logged MDT purposes, at substantially the same location and time, or at a nearby location and time. Recording both LP-WUS/LP-SS measurement results and SSB measurement results allows the network to obtain information regarding discrepancies between cell coverage (SSB coverage) and LP-WUS coverage.

The UE 1 may collect or record LP-WUS/LP-SS measurement results for Logged MDT purposes at the same timings as for existing Logged MDT. Additionally or alternatively, the UE 1 may collect or record LP-WUS/LP-SS measurement results for Logged MDT purposes either or both at the time of the MR 11 entering the ultra-deep sleep power state and at the time of the MR 11 waking up from the ultra-deep sleep power state. This enables recording of LP-WUS/LP-SS measurement results at specific timings related to MR 11's transition into and out of ultra-deep sleep.

The UE 1 may explicitly indicate to the network that the MDT measurement results it reports to the network pertain to LP-WUS/LP-SS measurements. Specifically, the UE 1 may include a field or information element in an RRC message (e.g., UEInformationResponse message) carrying measurement results related to Logged MDT, indicating that these measurement results are or contain LP-WUS/LP-SS measurement results.

The UE 1 may receive an MDT measurement configuration from the network, including a configuration or indication of LP-WUS/LP-SS measurement logging. In response to receiving the MDT measurement configuration, the UE 1 may perform Logged MDT measurement result logging, including recording LP-WUS or LP-SS measurement results, while in the RRC_IDLE or INACTIVE state.

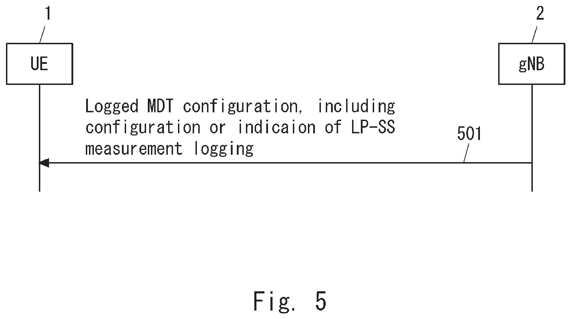

Fig. 5 shows an example of signaling between the UE 1 and the gNB 2. In step 501, the gNB 2 transmits a Logged MDT measurement configuration to the UE 1, which includes a configuration or indication of LP-WUS/LP-SS measurement logging. The gNB 2 may send the Logged MDT measurement configuration to the UE 1 via an RRC message dedicated to the UE 1. This RRC message may be a LoggedMeasurementConfiguration message.

The procedure described with reference to Fig. 5 enables the gNB 2 to inform the UE 1 that LP-WUS/LP-SS measured values need to be collected for Logged MDT. This helps clarify the signaling details regarding Logged MDT measurement logging by UEs supporting the low power mechanism using LP-WUS and LP-WUR.

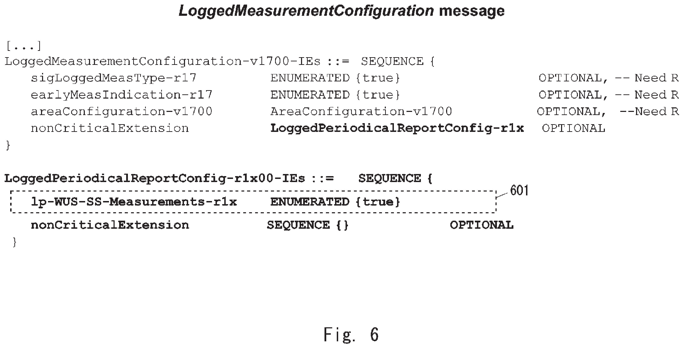

Fig. 6 shows an example of the format of a LoggedMeasurementConfiguration message transmitted from the gNB 2 to the UE 1. In the example of Fig. 6, the LoggedMeasurementConfiguration message can include an 1p-WUS-SS-Measurements field or Information Element (IE) 601 regarding a periodic report configuration (LoggedPeriodicalReportConfig). The field or IE 601 may be an enumerated type and may indicate "true". The LoggedMeasurementConfiguration message of Fig. 6 indicates the need for LP-WUS/LP-SS measurement logging to the UE 1 by containing the 1p-WUS-SS-Measurements field or IE 601. The field or IE 601 may be referred to by other names, such as "lp-WUS-Measurements", "1p-SS-Measurements", "lowPower-WUS-Measurements", or "lowPower-SS-Measurements".

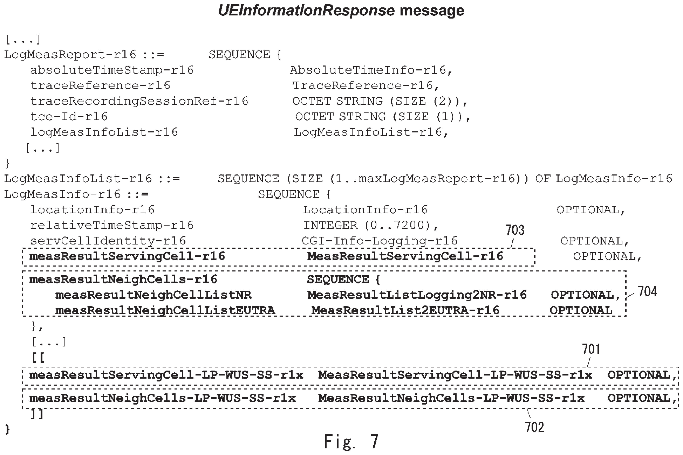

Fig. 7 shows an example format of a UEInformationResponse message sent from the UE 1 to the gNB 2. The UE 1 sends a UEInformationResponse message in response to a UEInformationRequest message from the network (e.g., gNB 2). A UEInformationResponse message can be used to report Logged MDT measurement results to the network. The UEInformationResponse message in the example of Fig. 7 can include a measResultServingCell-LP-WUS-SS field or IE 701. The field or IE 701 indicates recorded measurement results of LP-SS of the serving cell. The field or IE 701 may be referred to by other names, such as "measResultServingCell-LP-SS" or "measResultServingCell-LP-WUS".

Additionally, the UEInformationResponse message in the example of Fig. 7 can include a measResultNeighCells-LP-WUS-SS field or IE 702. The field or IE 702 indicates recorded measurement results of LP-SS of neighbor cells. The field or IE 702 may be referred to by other names, such as "measResultNeighCells-LP-SS" or "measResultNeighCells-LP-WUS".

Instead of the field or IE 701, an enhancement may be made such that a measResultServingCell field or IE 703 indicates recorded measurement results of the serving cell's LP-SS. Likewise, instead of the field or IE 702, a measResultNeighCells field or IE 704 may be enhanced to indicate recorded measurement results of LP-SS of neighbor cells.

Additionally, the UEInformationResponse message may be enhanced to include information indicating that it contains measurement results of LP-WUS or LP-SS (e.g., logMeasAvailableLP-WUS or logMeasAvailableLP-SS).

### Second Example Embodiment

This example embodiment relates to IDLE/INACTIVE measurement reporting. Example configurations of a radio communication system according to this example embodiment are similar to those described with reference to Figs. 1 to 3. IDLE/INACTIVE measurements are a feature introduced in 3GPP Release 16. IDLE/INACTIVE measurement is a function in which the UE acquires and stores measurement results from the serving cell and neighbor cells while in the RRC_IDLE or RRC_INACTIVE state, and transmits the stored measurement results to the network while in the RRC_CONNECTED state. During IDLE/INACTIVE measurements, the UE performs measurements on neighbor cells that are in (or can be in) a given relationship with the serving cell, and acquires and stores measurement results. A cell in a given relationship is a cell that can be used as a Secondary Cell (SCell) for Carrier Aggregation (CA) where the serving cell is the Primary Cell (PCell). Alternatively, a cell in a predetermined relationship is a cell that can be used as a Primary Secondary Cell Group (SCG) Cell (PSCell) for Dual Connectivity (DC) where the serving cell is the Master Cell Group (MCG) Special Cell (i.e., PCell).

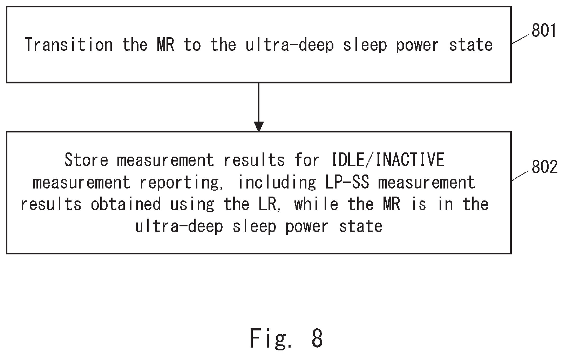

Fig. 8 shows an example of the operation of the UE 1. In step 801, the UE 1 transitions the MR 11 to the ultra-deep sleep power state. In step 802, at least while the MR 11 is in the ultra-deep sleep power state, the UE 1 stores measurement results for IDLE/INACTIVE measurement reporting, including measurement results of a low-power wake-up-related signal obtained using the LR 12. A low-power wake-up-related signal may be LP-WUS, LP-SS, or both. Measurement results of LP-WUS or LP-SS may be, for example, measured values of signal strength or received power. the UE 1 may store measurement results of LP-WUS or LP-SS of the serving cell and neighbor cells.

The same conditions that apply to existing IDLE/INACTIVE measurements (i.e., that the neighbour cells be in a given relationship with the serving cell) may apply to LP-WUS or LP-SS measurements in IDLE/INACTIVE measurements. Additionally or alternatively, different conditions (or constraints) may apply. For example, a condition for measuring LP-WUS or LP-SS of a neighbor cell may be that the neighbor cell supports LP-WUS or LP-SS. Alternatively, this condition may be added as a new condition for measuring LP-WUS or LP-SS of a neighbor cell.

The operation described with reference to Fig. 8 enables the UE 1 to perform IDLE/INACTIVE measurement reporting that includes measurement results of low-power wake-up-related signals (e.g., LP-WUS, LP-SS, or both). This helps enhance IDLE/INACTIVE measurement reporting by UEs supporting the low-power mechanism using LP-WUS and LP-WUR.

The UE 1 may collect measurement results of low-power wake-up-related signals (e.g., LP-WUS, LP-SS, or both) using the LR 12 for IDLE/INACTIVE measurement reporting purposes, even while the MR 11 is awake and operating. This allows the network to know in detail the LP-WUS coverage situation at the UE 1's location.

If the LR 12 is capable of measuring at least a part of SSB (e.g., SSS), the UE 1 may collect or record SSB measurement results for DLE/INACTIVE measurement reporting purposes, instead of or in addition to LP-WUS/LP-SS measurement results. The UE 1 may collect or record LP-WUS/LP-SS measurement results and SSB measurement results for IDLE/INACTIVE measurement reporting purposes, at substantially the same location and time, or at a nearby location and time. Recording both LP-WUS/LP-SS measurement results and SSB measurement results allows the network to obtain information regarding discrepancies between cell coverage (SSB coverage) and LP-WUS coverage.

The UE 1 may explicitly indicate to the network that the measurement results it reports to the network pertain to LP-WUS/LP-SS measurements. Specifically, the UE may include a field or information element in an RRC message (e.g., RRCResumeComplete message or UEInformationResponse message) that carries IDLE/INACTIVE measurement reporting, indicating that these measurement results are or contain LP-WUS/LP-SS measurement results.

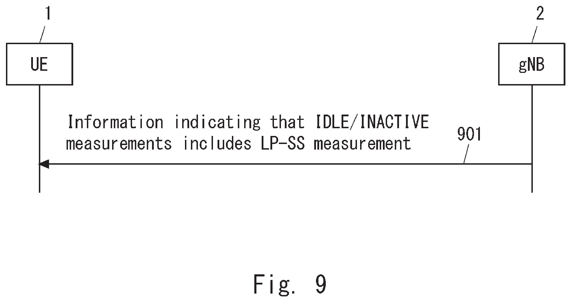

The UE 1 may receive information from the network indicating that IDLE/INACTIVE measurements include measurements of a low-power wake-up-related signal. In response to receiving this information, the UE 1 may store LP-WUS or LP-SS measurement results while in the RRC_IDLE or INACTIVE state. Fig. 9 shows an example of signaling between the UE 1 and the gNB 2. In step 901, the gNB 2 transmits information to the UE 1 indicating that IDLE/INACTIVE measurements include measurements of a low-power wake-up-related signal. The gNB 2 may transmit this information to the UE 1 via an RRC message dedicated to the UE 1, or via common system information in the cell. The RRC message may be an RRCRelease message for releasing or suspending an RRC connection. the gNB 2 may include the information in SIB type 1 (SIB1) or SIB type 11 (SIB11).

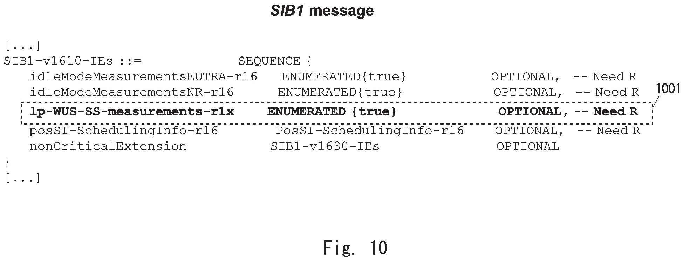

Fig. 10 shows an example format of a SIB1 message broadcast by the gNB 2 in the cell 21. In the example of Fig. 10, the SIB1 message can include an 1p-WUS-SS-measurements field or IE 1001. The field or IE 1001 may be an enumerated type and may indicate "true". The SIB1 message of Fig. 10 indicates to the UE 1 that LP-WUS/LP-SS measurement results need to be stored for IDLE/INACTIVE measurement reporting by containing the 1p-WUS-SS-measurements field or IE 1001.

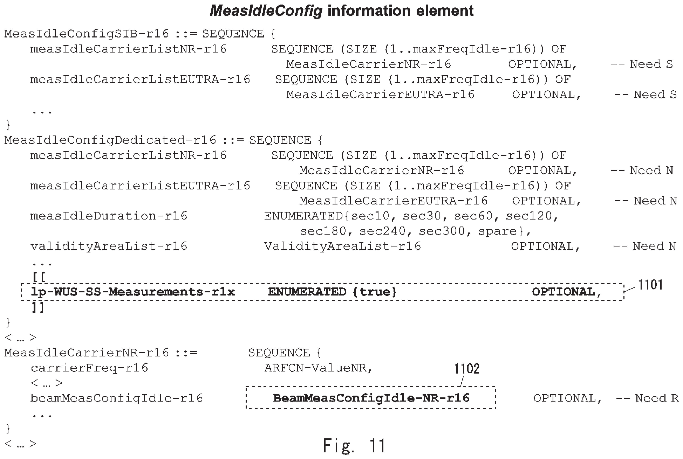

Fig. 11 shows an example format of a MeasIdleConfig IE. A MeasIdleConfig IE contains configurations for IDLE/INACTIVE measurements. A MeasIdleConfig IE may be included in an RRCRelease message or in SIB 11. The MeasIdleConfig IE in the example of Fig. 11 can include an 1p-WUS-SS-Measurements field or IE 1101. The field or IE 1101 may be an enumerated type and may indicate "true". The MeasIdleConfig IE of Fig. 11 indicates to the UE 1 that LP-WUS/LP-SS measurements are required for IDLE/INACTIVE measurement reporting by containing the 1p-WUS-SS-Measurements field or IE 1101. The field or IE 1101 may be referred to by other names, such as "lp-WUS-Measurements", "lp-SS-Measurements", "lowPower-WUS-Measurements", or "lowPower-SS-Measurements".

Instead of the Field or IE 1101, a BeamMeasConfigIdle field or IE 1102 may be enhanced to indicate to the UE 1 that LP-WUS/LP-SS measurements are required for IDLE/INACTIVE measurement reporting.

If the state where the MR 11 is in the ultra-deep sleep power state is defined as a new RRC state (e.g., RRC_OFF, RRC_SUSPEND, RRC_SUSPENDED, or RRC_SLEEP), IDLE/INACTIVE measurements may be defined or enhanced to further include measurements in the new RRC state. Alternatively, new measurements in the new RRC state, similar to existing IDLE/INACTIVE measurements, may be newly specified.

### Third Example Embodiment

This example embodiment relates to SDT. Example configurations of a radio communication system according to this example embodiment are similar to those described with reference to Figs. 1 to 3. SDT is a procedure that enables the UE 1 to transmit data or signaling while remaining in the RRC_INACTIVE state, without transitioning to the RRC_CONNECTED state. SDT includes Random access based SDT (RA-SDT) and configured grant (CG) based SDT (CG-SDT). RA-SDT is performed using a random access procedure. CG-SDT, on the other hand, is performed using a configured grant (CG) Type 1 without using a random access procedure.

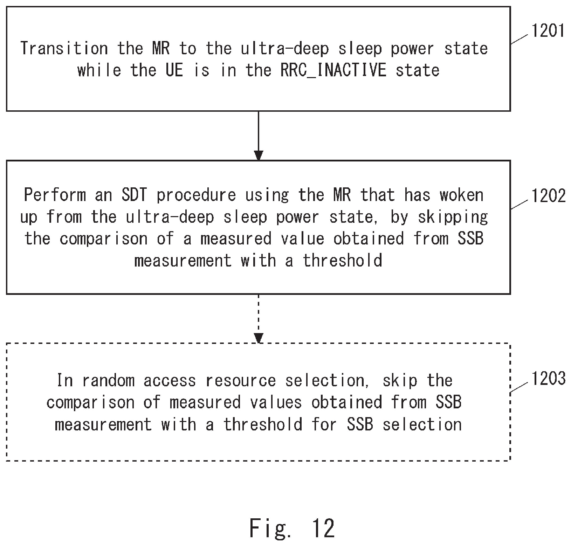

Fig. 12 shows an example of the operation of the UE 1. In step 1201, the UE 1 transitions the MR 11 into the ultra-deep sleep power state while the UE 1 is in the RRC_INACTIVE state. In step 1202, the UE 1 performs an SDT procedure using the MR 11 that has woken up from the ultra-deep sleep power state, by skipping the comparison of a measured value obtained from an SSB measurement with a first threshold (e.g., sdt-RSRP-Threshold). In other words, the UE 1 skips the comparison between an SSB measured value and a first threshold (e.g., sdt-RSRP-Threshold) in determining whether a condition for initiating the SDT procedure is met. The UE 1 wakes up the MR 11 from the ultra-deep sleep power state in response to receiving, from a Non-Access Stratum (NAS) layer, uplink data to be transmitted over a radio bearer with SDT enabled. The UE 1 may receive configuration information from the network (e.g., gNB 2) indicating that the comparison of an SSB measured value with a first threshold is to be skipped.

To determine whether a condition for initiating the SDT procedure is met, the UE 1 may instead compare an LP-WUS or LP-SS measured value with a second threshold (e.g., rsrp-ThresholdSSB-LP-WUS or rsrp-ThresholdSSB-LP-SS). The second threshold, which is compared with an LP-WUS/LP-SS measured value, may be the same as the first threshold (e.g., sdt-RSRP-Threshold) for comparison with an SSB measured value, or it may be a different threshold. The UE 1 may receive the second threshold from the network (e.g., gNB 2).

After initiating the SDT procedure, the UE 1 may perform step 1203. In step 1203, during the selection of a random access resource in RA-SDT, the UE 1 skips comparing SSB measured values with a threshold (e.g., rsrp-ThresholdSSB) for SSB selection. Instead, the UE 1 may select any SSB during the selection of a random access resource.

Alternatively, in the selection of a random access resource for RA-SDT, the UE 1 may select an SSB or a Physical Random Access Channel (PRACH) occasion based on LP-WUS or LP-SS measured values obtained using the LR 12. A third threshold (e.g., rsrp-ThresholdSSB-LP-WUS or rsrp-ThresholdSSB-LP-SS) compared with LP-WUS or LP-SS measured values may be the same as the threshold (e.g., rsrp-ThresholdSSB) for comparison with SSB measured values, or it may be a different threshold. The UE 1 may receive the third threshold from the network (e.g., gNB 2). Additionally, in this case, the UE 1 needs to know the mapping (or association) between LP-WUS/SS beams to be swept and SSB beams to be swept, or the mapping (or association) between LP-WUS/SS beams to be swept and PRACH occasions. The UE 1 may receive this mapping from the network (e.g., gNB 2).

In step 1203 the UE 1 may perform SSB selection for CG-SDT. In this case, the UE 1 may skip comparing SSB measured values with a threshold (e.g., cg-SDT-RSRP-ThresholdSSB) for SSB selection. The UE 1 may instead perform SSB selection for CG-SDT based on LP-WUS or LP-SS measured values obtained using the LR 12. A threshold (e.g., cg-SDT-RSRP-ThresholdLP-WUS or cg-SDT-RSRP-ThresholdLP-SS) that is compared with LP-WUS or LP-SS measured values may be the same as the threshold for comparison with SSB measured values (e.g., cg-SDT-RSRP-ThresholdSSB), or it may be a different threshold.

The operation described with reference to Fig. 12 enables the UE 1 to initiate SDT without utilizing SSB measured values. This helps enhance SDT for UEs supporting the low-power mechanism using LP-WUS and LP-WUR.

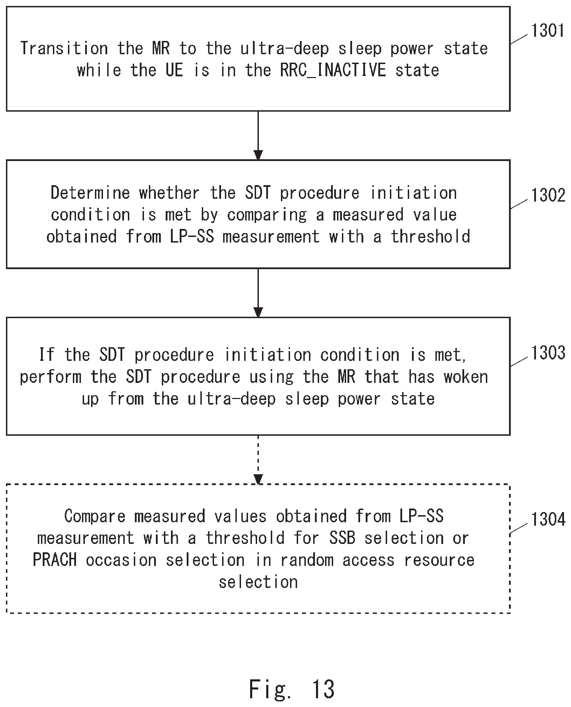

Fig. 13 shows an example of the operation of the UE 1. The operation shown in Fig. 13 can be considered a more specific example of the operation shown in Fig. 12. Step 1301 is identical to step 1201 in Fig. 12. The UE 1 transitions the MR 11 to the ultra-deep sleep power state while the UE 1 is in the RRC_INACTIVE state.

Steps 1302 and 1303 are a specific example of step 1202 in Fig. 12. In step 1302, the UE 1 determines whether the SDT procedure initiation condition is met by comparing a measured value obtained from LP-WUS or LP-SS measurements with a second threshold (e.g., rsrp-ThresholdSSB-LP-WUS or rsrp-ThresholdSSB-LP-SS). The second threshold compared with an LP-WUS/LP-SS measured value may be the same as the first threshold (e.g., sdt-RSRP-Threshold) used for comparison with an SSB measured value, or it may be a different threshold. In step 1303, if the SDT procedure initiation condition is satisfied, the UE 1 performs the SDT procedure using the MR 11 that has woken up from the ultra-deep sleep power state.

Step 1304 is a specific example of step 1203 in Fig. 12. In step 1304, the UE 1 compares measured values obtained from LP-WUS or P-SS measurements with a third threshold (e.g., rsrp-ThresholdSSB-LP-WUS or rsrp-ThresholdSSB-LP-SS) for SSB selection or PRACH occasion selection in the random access resource selection for RA-SDT. The UE 1 may select an LP-WUS/LP-SS beam that corresponds to an LP-WUS/LP-SS measured value exceeding the third threshold, and then select an SSB beam or RACH occasion associated with this LP-WUS/LP-SS beam. The third threshold may be the same as the threshold used for comparison with SSB measured values (e.g., rsrp-ThresholdSSB), or it may be a different threshold.

In step 1304, the UE 1 may perform SSB selection for CG-SDT. In this case, the UE 1 may perform SSB selection for CG-SDT based on LP-WUS or LP-SS measured values. The threshold (e.g., cg-SDT-RSRP-ThresholdLP-WUS or cg-SDT-RSRP-ThresholdLP-SS) that is compared with LP-WUS or LP-SS measured values may be the same as the threshold used for comparison with SSB measured values (e.g., cg-SDT-RSRP-ThresholdSSB), or it may be a different threshold.

The operation described with reference to Fig. 13 enables the UE 1 to initiate SDT without utilizing SSB measured values. This helps enhance SDT for UEs supporting the low-power mechanism using LP-WUS and LP-WUR.

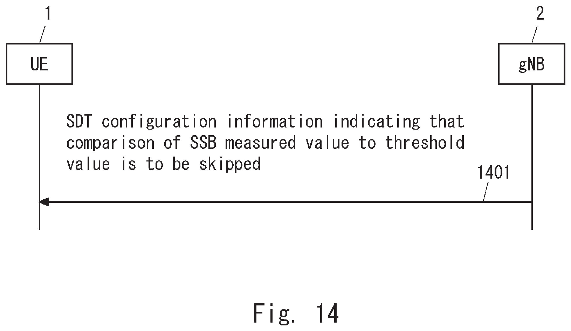

Fig. 14 shows an example of signaling between the UE 1 and the gNB 2. In step 1401, the gNB 2 transmits SDT configuration information to the UE 1 indicating that the comparison between an SSB measured value and a first threshold (e.g., sdt-RSRP-Threshold) to determine whether the SDT procedure initiation condition is satisfied is to be skipped. Upon receiving this SDT configuration information, the UE 1 skips the comparison of an SSB measured value with the first threshold in step 1202 of Fig. 12 or step 1302 of Fig. 13. The gNB 2 may transmit the SDT configuration information to the UE 1 via an RRC message dedicated to the UE 1, or via common system information in the cell. The RRC message may be an RRCRelease message for suspending the RRC connection. The gNB 2 may include the information in SIB1 broadcast within the cell 21.

The procedure described with reference to Fig. 14 enables g the gNB 2 to inform the UE 1 that the comparison of an SSB measured value with a first threshold to determine whether the SDT procedure initiation condition is met is to be skipped. This helps clarify the signaling details regarding SDT for UEs supporting the low-power mechanism using LP-WUS and LP-WUR.

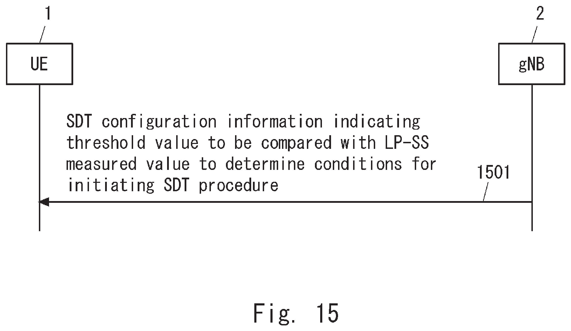

Fig. 15 shows an example of signaling between the UE 1 and the gNB 2. In step 1501, the gNB 2 transmits SDT configuration information to the UE 1, indicating a second threshold (e.g., rsrp-ThresholdSSB-LP-WUS or rsrp-ThresholdSSB-LP-SS) to be compared with an LP-WUS or LP-SS measured value to determine whether the SDT procedure initiation condition is satisfied. Upon receiving this SDT configuration information, the UE 1 performs a comparison between an LP-WUS/LP-SS measured value and the second threshold to determine whether the SDT procedure initiation condition is met, as described in step 1202 of Fig. 12 or step 1302 of Fig. 13. The gNB 2 may transmit the SDT configuration information to the UE 1 via an RRC message dedicated to the UE 1, or via common system information in the cell. The RRC message may be an RRCRelease message for suspending the RRC connection. The gNB 2 may include the configuration information in SIB1 broadcast within the cell 21.

The procedure described with reference to Fig. 15 enables the gNB 2 to notify or configure the UE 1 of the second threshold, which is compared with an LP-WUS/LP-SS measured value to determine whether the SDT procedure initiation condition is satisfied. This helps clarify the signaling details regarding SDT for UEs supporting the low-power mechanism using LP-WUS and LP-WUR.

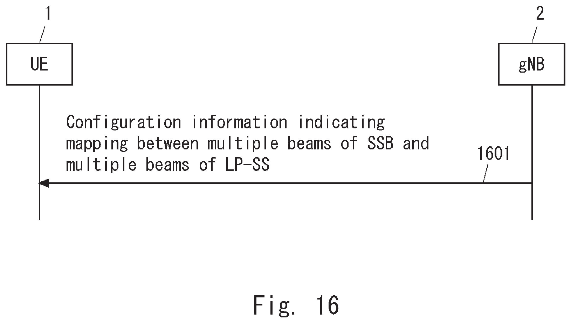

Fig. 16 shows an example of signaling between the UE 1 and the gNB 2. In step 1601, the gNB 2 transmits configuration information to the UE 1, indicating the mapping between multiple SSB beams or multiple random access occasions (or PRACH occasions) and multiple LP-WUS or LP-SS beams. Upon receiving this configuration information, the UE 1 performs SSB selection or PRACH occasion selection based on LP-WUS or LP-SS measured values, as described in step 1203 of Fig. 12 or step 1304 of Fig. 13. The gNB 2 may transmit the configuration information to the UE 1 via an RRC message dedicated to the UE 1, or via common system information in the cell. The RRC message may be an RRCRelease message for suspending the RRC connection. The gNB 2 may include the configuration information in SIB1 broadcast within the cell 21.

The procedure described with reference to Fig. 16 enables the gNB 2 to notify or configure the UE 1 of the mapping between multiple SSB beams or multiple random access occasions (or PRACH occasions) and multiple LP-WUS or LP-SS beams. The UE 1 can utilize this mapping for SSB selection or PRACH occasion selection. This helps clarify the signaling details regarding SDT for UEs supporting the low-power mechanism using LP-WUS and LP-WUR.

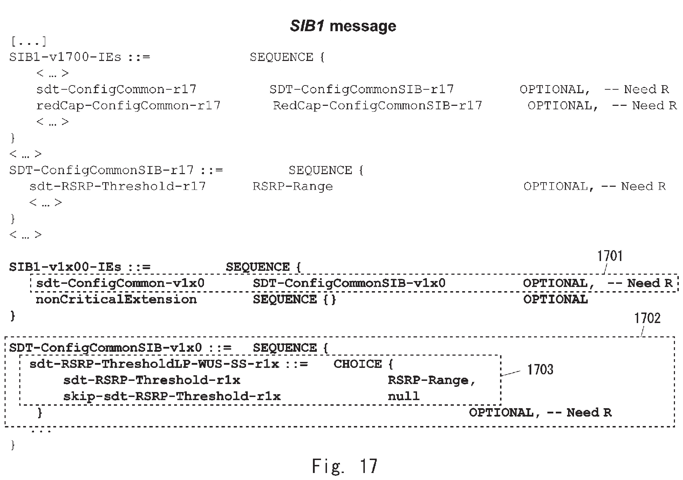

Fig. 17 shows an example format of a SIB1 message to be broadcast within the cell 21 by the gNB 2. the SIB1 message of the example shown in Fig. 17 can include an sdt-ConfigCommon field 1701. The sdt-ConfigCommon field 1701 includes an SDT-ConfigCommonSIB IE 1702. The SDT-ConfigCommonSIB IE 1702 includes an sdt-RSRP-ThresholdLP-WUS-SS field or IE 1703. The ThresholdLP-WUS-SS field or IE 1703 includes either an sdt-RSRP-Threshold IE or a skip-sdt-RSRP-Threshold IE. The sdt-RSRP-Threshold IE indicates the aforementioned second threshold to be compared with an LP-WUS or LP-SS measured value to determine whether the SDT procedure initiation condition is met. The sdt-RSRP-Threshold IE may be referred to by other names, such as "sdt-RSRP-ThresholdLP-SS" or "sdt-RSSI-ThresholdLP-SS". The skip-sdt-RSRP-Threshold IE indicates that both the SSB measured value comparison and the LP-WUS or LP-SS measured value comparison are to be skipped during the determination of the SDT procedure initiation condition.

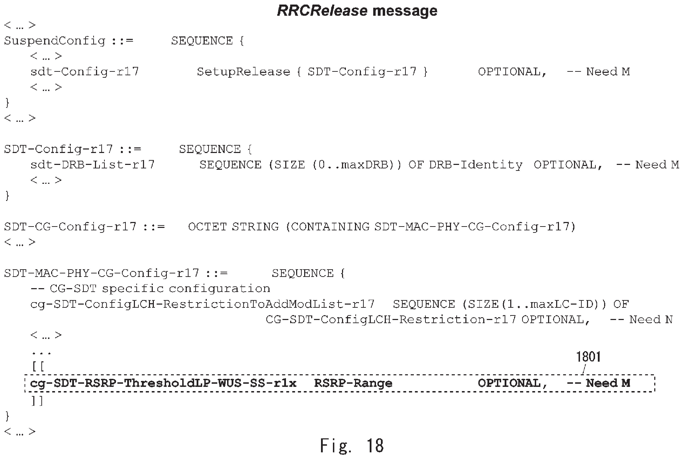

Fig. 18 shows an example format of an RRCRelease message to be sent from the gNB 2 to the UE 1 in order to suspend the RRC connection, or in other words, to transition the UE 1 to the RRC_INACTIVE state. The RRCRelease message of the example shown in Fig. 18 can include a cg-SDT-RSRP-ThresholdLP-WUS-SS field or IE 1801 within a CG-SDT configuration (SDT-CG-Config). This field or IE 1801 indicates the threshold value to be compared with LP-WUS or LP-SS measured values during SSB selection for CG-SDT. The UE 1 may select an LP-WUS/LP-SS beam that corresponds to an LP-WUS/LP-SS measured value exceeding the threshold, and then select an SSB beam associated with this LP-WUS/LP-SS beam. The cg-SDT-RSRP-ThresholdLP-WUS-SS field or IE 1801 may be referred to by other names, such as "cg-SDT-RSRP-ThresholdLP-SS" or "cg-SDT-RSSI-ThresholdLP-SS".

### Fourth Example Embodiment

This example embodiment relates to network slicing. Example configurations of a radio communication system according to this example embodiment are similar to those described with reference to Figs. 1 to 3.

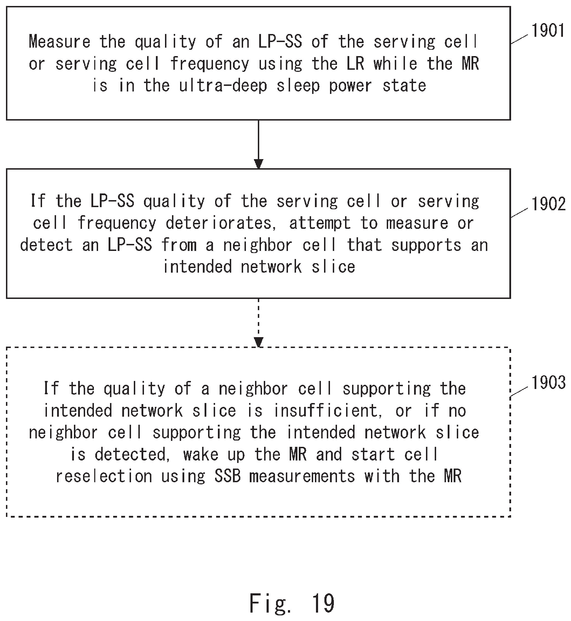

Fig. 19 shows an example of the operation of the UE 1. In step 1901, the UE 1 measures the quality (e.g., received signal strength) of an LP-WUS or LP-SS of the serving cell or serving cell frequency using the LR 12 while the MR 11 is in the ultra-deep sleep power state. In step 1902, if the LP-WUS/LP-SS quality of the serving cell or serving cell frequency deteriorates, the UE 1 attempts to measure or detect LP-WUS/LP-SS of a neighbor cell supporting an intended network slice.

A neighbor cell supporting an intended network slice may be a cell supporting a Network Slice Access Stratum AS Group (NSAG) that includes an intended Single Network Slice Selection Assistance Information (S-NSSAI). NASAG information is provided to the UE 1 on the NAS layer from an AMF in the core network. NASAG information includes a list of NSAGs and, for each NSAG, an NSAG ID, a list of S-NSSAI(s), and a priority value associated with the NSAG.

The UE 1 may perform step 1903. In step 1903, the UE 1 determines that the LP-WUS/LP-SS quality of a neighbor cell supporting the intended network slice is insufficient, or that no neighbor cell supporting the intended network slice is detected. Based on this determination, the UE 1 wakes up the MR 11 and starts cell reselection using SSB measurements with the MR 11. The evaluation process and cell reselection criterion in cell reselection using SSB measurements may be the same as existing ones, particularly those for slice-based cell reselection considering NSAG.

The operation described with reference to Fig. 19 enables the UE 1 to preferentially select a neighbor cell supporting its intended network slice, during cell reselection using LP-WUS/LP-SS measured values. This helps clarify the details of the UE 1's cell reselection operation using LP-WUS and LP-WUR.

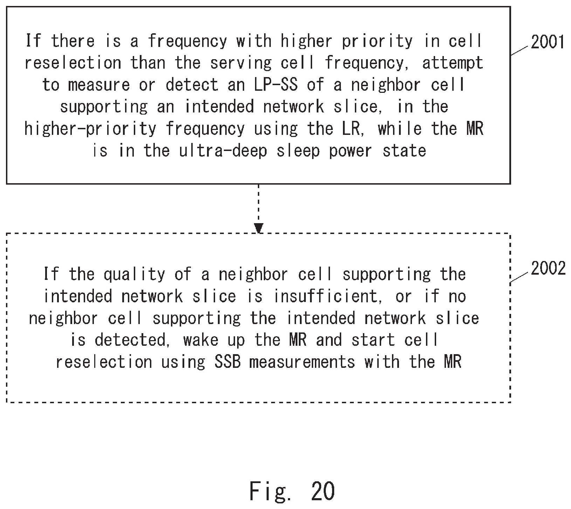

Fig. 20 shows another example of the operation of the UE 1. In step 2001, if there is a frequency with higher priority in cell reselection than the serving cell frequency, the UE 1 attempts to measure or detect an LP-WUS or LP-SS of a neighbor cell supporting an intended network slice, in the higher-priority frequency using the LR 12, while the MR 11 is in the ultra-deep sleep power state. The UE 1 may calculate the cell reselection priority per frequency according to the ranking rules or criteria for slice-based cell reselection. The ranking rules or criteria for slice-based cell reselection may be the same as existing ones. A neighbor cell supporting t an intended network slice may be a cell supporting an NSAG that includes an intended S-NSSAI.

The UE 1 may perform step 2002. Step 2002 is similar to step 1903 in Fig. 19. In step 2002, the UE 1 determines that the LP-WUS/LP-SS quality of a neighbor cell supporting the intended network slice is insufficient, or that no neighbor cell supporting the intended network slice is detected. Based on this determination, the UE 1 wakes up the MR 11 and starts cell reselection using SSB measurements with the MR 11. The evaluation process and cell reselection criterion in cell reselection using SSB measurements may be the same as existing ones, particularly those for slice-based cell reselection considering NSAG.

The operation described with reference to Fig. 20 enables the UE 1 to preferentially select a neighbor cell supporting its intended network slice, during cell reselection using LP-WUS/LP-SS measured values. This helps clarify the details of the UE 1's cell reselection operation using LP-WUS and LP-WUR.

### Other Example Embodiment 1

Support for LP-WUS (and LP-SS) for Reduced Capability (RedCap) UEs may be independent of support for LP-WUS (and LP-SS) for normal UEs (i.e., non-RedCap UEs). In other words, a cell may support LP-WUS for normal UEs and transmit LP-WUS, but that cell may not support LP-WUS for RedCap UEs. RedCap UEs possess reduced capabilities with the intention to have lower complexity with respect to non-RedCap UEs. It is mandatory for a RedCap UE to support 20 MHz maximum UE channel bandwidth in FR1 (i.e., sub-6 GHz bands) and 100 MHz in FR2 (i.e., millimeter wave (mmWave) bands). On the other hand, functions related to Carrier Aggregation (CA), Multi-Radio Dual Connectivity (MR-DC), Dual Active Protocol Stack (DAPS), and Integrated Access and Backhaul (IAB) are not supported by RedCap UEs. Redcap UEs may not perform any LP-WUS-related actions even if they receive information that LP-WUS is supported in the cell (or even if LP-WUS is being transmitted in the cell).

Alternatively, LP-WUS support in a cell may be common for both normal UEs and RedCap UEs. However, the conditions and thresholds used in procedures such as LP-WUS/LP-SS RRM measurements and cell reselection using LP-WUS/LP-SS measurements may differ between normal UEs and RedCap UEs.

If the LR 12 of UE 1 is capable of receiving at least part of SSB, the LR 12 may receive both Cell Defining (CD) SSB and Non-Cell Defining (NCD) SSB, or it may receive only one of CD-SSB and NCD-SSB.

Support for LP-WUS (and LP-SS) for Non-Terrestrial Network (NTN) UEs may be independent of support for LP-WUS (and LP-SS) for normal UEs (i.e., non-NTN UEs, or TN UEs). In other words, a cell may support LP-WUS for normal UEs and transmit LP-WUS, but that cell may not support LP-WUS for NTN UEs.

Alternatively, LP-WUS support in a cell may be common for both conventional UEs and NTN UEs. However, the conditions and thresholds used in procedures such as LP-WUS/LP-SS RRM measurements and cell reselection using LP-WUS/LP-SS measurements may differ between normal UEs and NTN UEs.

### Other Example Embodiment 2

In the example embodiments described above, the mobility state of the UE 1 (e.g., high, medium, low) or whether the UE 1 is stationary or not may be taken into account. For example, in the controls based on the various condition determinations in the example embodiments described above, the UE 1 or the gNB 2 may further consider a mobility condition regarding the mobility state of the UE 1 or whether it is stationary or not, and perform the control if the mobility condition is also met. Additionally or alternatively, the mobility condition may be specified as one of the conditions in the controls based on various condition determinations in the above example embodiments. The gNB 2 may transmit the mobility conditions to the UE 1 using a UE-specific RRC message (e.g., RRC Reconfiguration, RRC Release) or system information (e.g., SIB).

### Other Example Embodiment 3

In the above-described example embodiments, the UE 1 may suspend all transmission and reception processing using the MR 11 while the MR 11 is in the ultra-deep sleep power state (or the UE 1 is in a new RRC state corresponding to it). Instead, during that time, the UE 1 may only perform limited receive processing using the MR 11. For example, UE 1 may use the MR 11 to perform only RRM measurements (e.g., SSB measurements) of the serving cell or only RRM measurements of the serving cell's frequency, in (ultra) long cycles. For example, (ultra) long-cycle RRM measurements may be performed in conventional DRX cycles (e.g., paging cycles) in the RRC_IDLE and RRC_INACTIVE states, or in more relaxed DRX cycles. The UE 1 may use these RRM measurements in combination with the operations described in the above example embodiments as appropriate. For example, (ultra) long-cycle RRM measurements using the MR 11 may be used to determine if the UE 1 needs to perform RRM measurements of neighbor cells on the same frequency as the serving cell or cells on a different frequency, or to determine if the MR 11 needs to be (fully) wakened up. The (ultra) long-cycle RRM measurements using the MR 11 may be referred to as (ultra) relaxed RRM measurements. In this case, waking up the MR 11 may mean, for example, stopping the (ultra) relaxed RRM measurements and resuming the normal operation of the MR 11 (e.g., perform transmit and receive operations).

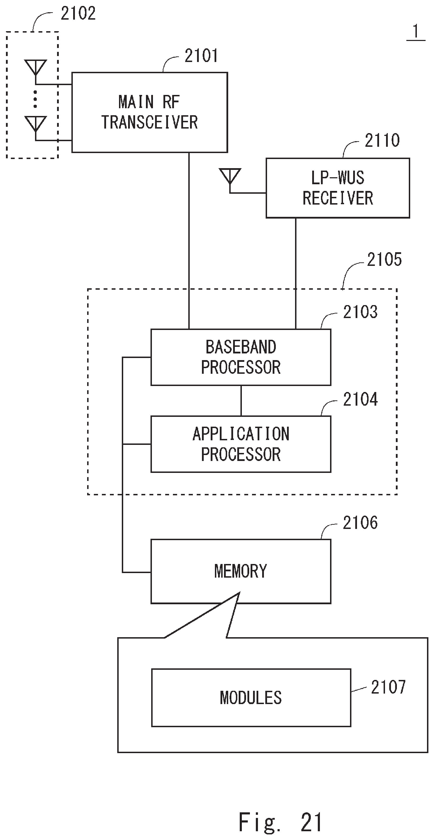

The following describes example configurations of the UE 1 and the gNB 2 related to the multiple example embodiments described above. Fig. 21 shows a block diagram of an example configuration of the UE 1. The main Radio Frequency (RF) transceiver 2101 corresponds to the RF unit included in the MR 11 described above. The main RF transceiver 2101 performs analog RF signal processing to communicate with RAN nods including the gNB 2. The main RF transceiver 2101 may include a plurality of transceivers. The analog RF signal processing performed by the main RF transceiver 2101 includes frequency up-conversion, frequency down-conversion, and amplification. The main RF transceiver 2101 is coupled with an antenna array 2102 and a baseband processor 2103. The main RF transceiver 2101 receives modulated symbol data (or orthogonal frequency-division multiplexing (OFDM) symbol data) from the baseband processor 2103, generates a transmission RF signal, and supplies the transmission RF signal to the antenna array 2102. The main RF transceiver 2101 also generates a baseband received signal based on a received RF signal received by the antenna array 2102, and supplies the baseband received signal to the baseband processor 2103. The main RF transceiver 2101 may include an analog beamformer circuit for beamforming. The analog beamformer circuit includes, for example, multiple phase shifters and multiple power amplifiers.

The baseband processor 2103 corresponds to the digital baseband unit included in the MR 11. The baseband processor 2103 performs digital baseband signal processing (data-plane processing) and control-plane processing for radio communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) generation of OFDM symbol data (baseband OFDM signal) using Inverse Fast Fourier Transform (IFFT) and so on. On the other hand, the control-plane processing includes communication management of layer 1 (e.g., transmission power control), layer 2 (e.g., radio resource management, and hybrid automatic repeat request (HARQ) processing), and layer 3 (e.g., signaling related to attach, mobility, and call management).

For example, the digital baseband signal processing performed by the baseband processor 2103 may include signal processing for the Service Data Adaptation Protocol (SDAP) layer, the Packet Data Convergence Protocol (PDCP) layer, the Radio Link Control (RLC) layer, the Medium Access Control (MAC) layer, and the Physical (PHY) layer. The control plane processing performed by the baseband processor 2103 may include processing of the Non-Access Stratum (NAS) protocol, the RRC protocol, MAC Control Elements (CEs), and DCIs.

The baseband processor 2103 may perform Multiple Input Multiple Output (MIMO) encoding and precoding for beamforming.

The baseband processor 2103 may include a modem processor (e.g., a digital signal processor (DSP)) that performs digital baseband signal processing and a protocol stack processor (e.g., a central processing unit (CPU) or a micro processing unit (MPU)) that performs control plane processing. In this case, the protocol stack processor that performs control plane processing may be integrated with an application processor 2104 described later.

The application processor 2104 is also referred to as a CPU, MPU, microprocessor, or processor core. The application processor 2104 may include a plurality of processors (a plurality of processor cores). The application processor 2104 executes a system software program (operating system (OS)) and various application programs (e.g., call application, web browser, mailer, camera operation application, music player application) read from a memory 2106 or an unillustrated memory, thereby realizing various functions of the UE 1.

In some implementations, as shown by the dashed line (2105) in Fig. 21, the baseband processor 2103 and the application processor 2104 may be integrated on a single chip. In other words, the baseband processor 2103 and the application processor 2104 may be implemented as a single System on Chip (SoC) device 2105. The SoC device may also be referred to as a system large-scale integration (LSI) or chipset.

The memory 2106 is a volatile memory or a non-volatile memory or a combination thereof. The memory 2106 may include a plurality of physically independent memory devices. The volatile memory is, for example, Static Random Access Memory (SRAM), Dynamic RAM (DRAM), or a combination thereof. The non-volatile memory is, for example, Mask Read Only Memory (MROM), Electrically Erasable Programmable ROM (EEPROM), flash memory, or a hard disk drive, or any combination thereof. For example, the memory 2106 may include an external memory device that is accessible by the baseband processor 2103, the application processor 2104, and the SoC 2105. The memory 2106 may include an internal memory device that is integrated into the baseband processor 2103, the application processor 2104, or the SoC 2105. In addition, the memory 2106 may include memory within a Universal Integrated Circuit Card (UICC).

The memory 2106 may store one or more software modules (or computer programs) 2107 that include a set of instructions and data for performing the processing by the UE 1 described in the above example embodiments. In some implementations, the baseband processor 2103 or the application processor 2104 may be configured to read and execute the software modules 2107 from the memory 2106, thereby performing the processing of the UE 1 as described in the above example embodiments with reference to the drawings.

The LP-WUS receiver 1710 corresponds to the LR 12 described above. The LP-WUS receiver 1710 is capable of monitoring low-power wake-up-related signals transmitted from gNB 2, such as LP-WUS and LP-SS. The LP-WUS receiver 1710 includes an RF unit and a digital baseband unit for receiving low-power wake-up-related signals. The LP-WUS receiver 1710 is coupled to the baseband processor 2103 or the application processor 2104, or both.

The control plane processing and operations performed by the UE 1 described in the above example embodiment may be implemented by elements other than the RF transceiver 2101, the antenna array 2102, and the LP-WUS receiver 1710, namely at least one of the baseband processor 2103 and the application processor 2104, and the memory 2106 that stores the software modules 2107.

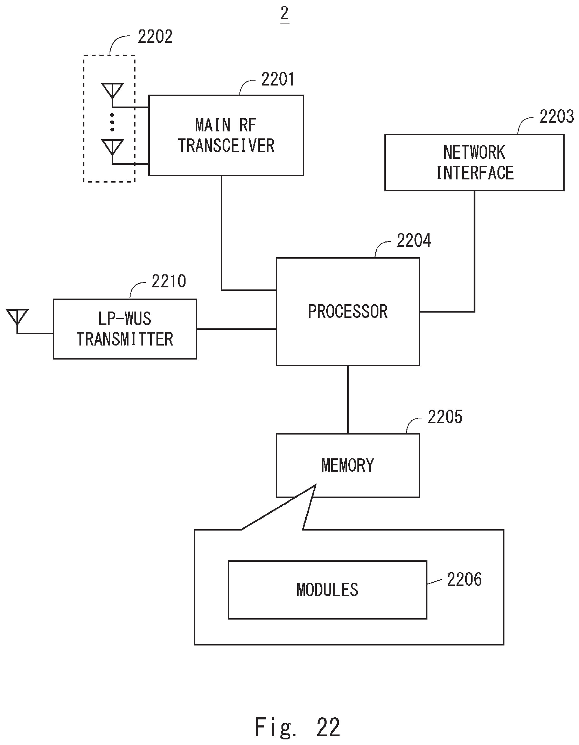

Fig. 22 is a block diagram showing an example configuration of the gNB 2 according to the above-described example embodiments. Referring to Fig. 22, the gNB 2 includes a main RF transceiver 2201, a network interface 2203, a processor 2204, and a memory 2205. The main RF transceiver 2201 performs analog RF signal processing to communicate with UEs including the UE 1. The RF transceiver 2201 may include a plurality of transceivers. The RF transceiver 2201 is coupled to an antenna array 2202 and the processor 2204. The RF transceiver 2201 receives modulated symbol data from the processor 2204, generates a transmission RF signal, and supplies the transmission RF signal to the antenna array 2202. The RF transceiver 2201 generates a baseband reception signal based on a reception RF signal received by the antenna array 2202 and supplies the baseband reception signal to the processor 2204. The RF transceiver 2201 may include an analog beamformer circuit for beamforming. The analog beamformer circuit includes, for example, a plurality of phase shifters and a plurality of power amplifiers.

The network interface 2203 is used to communicate with network nodes (e.g., other gNBs and RAN nodes, as well as control nodes and transfer nodes in the core network). For example, the network interface 2203 may include a network interface card (NIC) conforming to the IEEE 802.3 series.

The processor 2204 performs digital baseband signal processing (data plane processing) and control plane processing for radio communication. The processor 2204 may include a plurality of processors. For example, the processor 2204 may include a modem processor (e.g., DSP) that performs digital baseband signal processing and a protocol stack processor (e.g., CPU or MPU) that performs control plane processing.

For example, digital baseband signal processing by the processor 2204 may include signal processing for the SDAP, PDCP, Radio RLC, MAC, and PHY layers. Control plane processing by the processor 2204 may include processing of NAS messages, RRC messages, MAC CEs, and DCIs.

The processor 2204 may include a digital beamformer module for beamforming. The digital beamformer module may include a MIMO encoder and precoder.

The memory 2205 is composed of a combination of a volatile memory and a non-volatile memory. The volatile memory is, for example, SRAM or DRAM or a combination thereof. The non-volatile memory is MROM, EEPROM, flash memory, or a hard disk drive, or any combination thereof. The memory 2205 may include storage located separate from the processor 2204. In this case, the processor 2204 may access the memory 2205 via a network interface 2203 or an unillustrated I/O interface.

The memory 2205 may store one or more software modules (computer programs) 2206 containing instructions and data for performing the processing by the gNB 2 described in the above example embodiments. In some implementations, the processor 2204 may be configured to execute the software modules 2206 read from the memory 2205, thereby performing the processing of the gNB 2 described in the above example embodiments.

The LP-WUS transmitter 1810 is capable of transmitting low-power wake-up-related signals, such as LP-WUS and LP-SS. The LP-WUS transmitter 1810 is coupled to the processor 2204.

If the gNB 2 is a CU (e.g., eNB-CU or gNB-CU) or a CU-CP, the gNB 2 may not include the RF transceiver 2201 (and the antenna array 2202), nor the LP-WUS transmitter 1810.

As explained using Figs. 21 and 22, each of the processors of the UE 1 and gNB 2 in the above example embodiments can execute one or more programs, containing a set of instructions, to cause a computer to perform an algorithm described with reference to the drawings. Each of these programs contains a set of instructions (or software codes) that, if loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered trademark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustic, or other form of propagated signals.

The above example embodiments are merely examples of the application of the technical concepts obtained by the inventor. These technical concepts are not limited to the above example embodiments and may be modified in various ways.

For example, the whole or part of the example embodiments disclosed above can be described as, but not limited to, the following supplementary notes. Of course, some or all of the elements (e.g., configurations and functionality) described in the Supplementary Notes directed to an apparatus (e.g., radio terminal, RAN node) may also be described as or in Supplementary Notes directed to methods and programs. For example, some or all of the elements listed in Supplementary Notes 2-7 that depend on Supplementary Note 1 may also be listed as Supplementary Notes that depend on Supplementary Note 14 or 16 with the same dependency as Supplementary Notes 2-7. Similarly, some or all of the elements listed in Supplementary Notes 9-13 that depend on Supplementary Note 8 may also be listed as Supplementary Notes that depend on Supplementary Note 15 or 17 with the same dependency as Supplementary Notes 9-13. Some or all of the elements described in a Supplementary Note may be applicable to various hardware, software, storage for storing software, systems, and methods.

### (Supplementary Note 1)

A radio terminal comprising:
a main transceiver;
a low-power wake-up receiver; and
means for recording Minimization of Drive Tests (MDT) measurement results, including measurement results of a low-power wake-up-related signal obtained using the low-power wake-up receiver, at least while the main transceiver is in an ultra-deep sleep power state.

### (Supplementary Note 2)

The radio terminal according to Supplementary Note 1, wherein the means for recording is adapted to record a measurement result of the low-power wake-up-related signal either or both at a time of the main transceiver entering the ultra-deep sleep power state and at a time of the main transceiver waking up from the ultra-deep sleep power state.

### (Supplementary Note 3)

The radio terminal according to Supplementary Note 1 or 2, further comprising means for explicitly indicating, in a report of the MDT measurement results to a network, that the MDT measurement results relate to measurements of the low-power wake-up-related signal.

### (Supplementary Note 4)

The radio terminal according to any one of Supplementary Notes 1 to 3, further comprising means for receiving from a network an MDT measurement configuration including a configuration or indication of measurement logging of the low-power wake-up-related signal,
wherein the means for recording is adapted to record measurement results of the low-power wake-up-related signal in response to receiving the MDT measurement configuration.

### (Supplementary Note 5)

The radio terminal according to any one of Supplementary Notes 1 to 4, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

### (Supplementary Note 6)

The radio terminal according to any one of Supplementary Notes 1 to 5, wherein the means for recording is adapted to record for MDT, in addition to measurement results of the low-power wake-up-related signal, measurement results of a Synchronization Signal (SS)/Physical Broadcast Channel (PBCH) block (SSB).

### (Supplementary Note 7)

The radio terminal according to any one of Supplementary Notes 1 to 6, wherein the MDT is a Logged MDT.

### (Supplementary Note 8)

A radio access network (RAN) node comprising:
means for transmitting to a radio terminal a Minimization of Drive Tests (MDT) measurement configuration including a configuration or indication of measurement logging of a low-power wake-up-related signal.

### (Supplementary Note 9)

The RAN node according to Supplementary Note 8, wherein the MDT measurement configuration causes the radio terminal to record MDT measurement results, including measurement results of the low-power wake-up-related signal obtained using a low-power wake-up receiver of the radio terminal, at least while a main transceiver of the radio terminal is in an ultra-deep sleep power state.

### (Supplementary Note 10)

The RAN node according to Supplementary Note 9, wherein the MDT measurement configuration causes the radio terminal to record a measurement result of the low-power wake-up-related signal either or both at a time of the main transceiver entering the ultra-deep sleep power state and at a time of the main transceiver waking up from the ultra-deep sleep power state.

### (Supplementary Note 11)

The RAN node according to Supplementary Note 9 or 10, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

### (Supplementary Note 12)

The RAN node according to any one of Supplementary Notes 8 to 11, wherein the MDT measurement results include, in addition to measurement results of the low-power wake-up-related signal, measurement results of a Synchronization Signal (SS)/Physical Broadcast Channel (PBCH) block (SSB).

### (Supplementary Note 13)

The RAN node according to any one of Supplementary Notes 8 to 12, wherein the MDT is a Logged MDT.

### (Supplementary Note 14)

A method performed by a radio terminal, the method comprising:
recording Minimization of Drive Tests (MDT) measurement results, including measurement results of a low-power wake-up-related signal obtained using a low-power wake-up receiver, at least while a main transceiver is in an ultra-deep sleep power state.

### (Supplementary Note 15)

A method performed by a radio access network (RAN) node, the method comprising:
transmitting to a radio terminal a Minimization of Drive Tests (MDT) measurement configuration including a configuration of measurement logging of a low-power wake-up-related signal.

### (Supplementary Note 16)

A program for causing a computer to perform a method for a radio terminal, the method comprising:
recording Minimization of Drive Tests (MDT) measurement results, including measurement results of a low-power wake-up-related signal obtained using a low-power wake-up receiver, at least while a main transceiver is in an ultra-deep sleep power state.

### (Supplementary Note 17)

A program for causing a computer to perform a method for a radio access network (RAN) node, the method comprising:
transmitting to a radio terminal a Minimization of Drive Tests (MDT) measurement configuration including a configuration of measurement logging of a low-power wake-up-related signal.

### (Supplementary Note 18)

A radio terminal comprising:
a main transceiver;
a low-power wake-up receiver; and
means for storing measurement results for IDLE/INACTIVE measurement reporting, including measurement results of a low-power wake-up-related signal obtained using the low-power wake-up receiver, at least while the main transceiver is in an ultra-deep sleep power state.

### (Supplementary Note 19)

The radio terminal according to Supplementary Note 18, further comprising means for explicitly indicating, in the IDLE/INACTIVE measurement reporting to a network, that the measurement results for the IDLE/INACTIVE measurement reporting relate to measurements of the low-power wake-up-related signal.

### (Supplementary Note 20)

The radio terminal according to Supplementary Note 18 or 19, further comprising means for receiving information from a network indicating that IDLE/INACTIVE measurements include measurements of the low-power wake-up-related signal,
wherein the means for storing is adapted to store measurement results of the low-power wake-up-related signal in response to receiving the information.

### (Supplementary Note 21)

The radio terminal according to Supplementary Note 20, wherein the means for receiving is configured to receive the information via a Radio Resource Control (RRC) message dedicated to the radio terminal, or via common system information in a cell.

### (Supplementary Note 22)

The radio terminal according to Supplementary Note 20, wherein the means for receiving is configured to receive the information via an RRCRelease message.

### (Supplementary Note 23)

The radio terminal according to Supplementary Note 20, wherein the means for receiving is configured to receive the information via System Information Block type 1 (SIB1) or SIB type 11 (SIB11).

### (Supplementary Note 24)

The radio terminal according to any one of Supplementary Notes 18 to 23, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

### (Supplementary Note 25)

A radio access network (RAN) node comprising:
means for transmitting information to a radio terminal indicating that IDLE/INACTIVE measurements include measurements of a low-power wake-up-related signal.

### (Supplementary Note 26)

The RAN node according to Supplementary Note 25, wherein the information causes the radio terminal to store measurement results for IDLE/INACTIVE measurement reporting, including measurement results of the low-power wake-up-related signal obtained using a low-power wake-up receiver of the radio terminal, at least while a main transceiver of the radio terminal is in an ultra-deep sleep power state.

### (Supplementary Note 27)

The RAN node according to Supplementary Note 25 or 26, wherein the means for transmitting is configured to transmit the information to the radio terminal via a Radio Resource Control (RRC) message dedicated to the radio terminal, or via common system information within a cell.

### (Supplementary Note 28)

The RAN node according to Supplementary Note 25 or 26, wherein the means for transmitting is configured to transmit the information via an RRC Release message.

### (Supplementary Note 29)

The RAN node according to Supplementary Note 25 or 26, wherein the means for transmitting is configured to transmit the information via System Information Block type 1 (SIB1) or SIB type 11 (SIB11).

### (Supplementary Note 30)

The RAN node according to Supplementary Note 26, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

### (Supplementary Note 31)

A method performed by a radio terminal, the method comprising:
storing measurement results for IDLE/INACTIVE measurement reporting, including measurement results of a low-power wake-up-related signal obtained using a low-power wake-up receiver, at least while a main transceiver is in an ultra-deep sleep power state.

### (Supplementary Note 32)

A method performed by a radio access network (RAN) node, the method comprising:
transmitting information to a radio terminal indicating that a low-power wake-up-related signal is subject to IDLE/INACTIVE measurements.

### (Supplementary Note 33)

A program for causing a computer to perform a method for a radio terminal, the method comprising:
storing measurement results for IDLE/INACTIVE measurement reporting, including measurement results of a low-power wake-up-related signal obtained using a low-power wake-up receiver, at least while a main transceiver is in an ultra-deep sleep power state.

### (Supplementary Note 34)

A program for causing a computer to perform a method for a radio access network (RAN) node, the method comprising:
transmitting information to a radio terminal indicating that a low-power wake-up-related signal is subject to IDLE/INACTIVE measurements.

### (Supplementary Note 35)

A radio terminal comprising:
a main transceiver;
a low-power wake-up receiver; and
means for performing a Small Data Transmission (SDT) procedure using the main transceiver that has woken up from an ultra-deep sleep power state, by skipping a comparison of a first measured value obtained from a Synchronization Signal (SS)/Physical Broadcast Channel (PBCH) block (SSB) measurement with a first threshold.

### (Supplementary Note 36)

The radio terminal according to Supplementary Note 35, wherein the means for performing is adapted to perform a comparison of a second measured value obtained from a measurement of a low-power wake-up-related signal using the low-power wake-up receiver with a second threshold, to determine whether a condition for initiating the SDT procedure is satisfied.

### (Supplementary Note 37)

The radio terminal according to Supplementary Note 36, further comprising means for receiving first configuration information indicating the second threshold from a network.

### (Supplementary Note 38)

The radio terminal according to any one of Supplementary Notes 35 to 37, further comprising means for skipping a comparison of the first measured value with a threshold for an SSB selection in a random access resource selection.

### (Supplementary Note 39)

The radio terminal according to Supplementary Note 38, further comprising means for selecting, in the random access resource selection, an SSB or Physical Random Access Channel (PRACH) occasion based on a second measured value obtained from a measurement of a low-power wake-up-related signal using the low-power wake-up receiver.

### (Supplementary Note 40)

The radio terminal according to Supplementary Note 39, further comprising means for receiving, from a network, second configuration information indicating a mapping of a plurality of beams of the SSB, or a plurality of random access occasions, to a plurality of beams of the low-power wake-up-related signal.

### (Supplementary Note 41)

The radio terminal according to Supplementary Note 38, further comprising means for selecting any SSB in the random access resource selection.

### (Supplementary Note 42)

The radio terminal according to any one of Supplementary Notes 35 to 41, further comprising means for receiving third configuration information indicating that the comparison of the first measured value with the first threshold value is to be skipped,
wherein the means for initiating is adapted to skip the comparison of the first measured value with the first threshold value in response to receiving the third configuration information.

### (Supplementary Note 43)

The radio terminal according to any one of Supplementary Notes 35 to 42, further comprising means for waking up the main transceiver in response to receiving, from a Non-Access Stratum (NAS) layer, uplink data to be transmitted over a radio bearer with SDT enabled.

### (Supplementary Note 44)

The radio terminal according to any one of Supplementary Notes 35 to 43, wherein the SDT procedure is a procedure that enables the radio terminal to transmit data or signaling while remaining in an RRC_INACTIVE state without transitioning to an RRC_CONNECTED state.

### (Supplementary Note 45)

The radio terminal according to any one of Supplementary Notes 35 to 44, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving a low-power wake-up-related signal, and
the low-power wake-up receiver is used to receive the low-power wake-up-related signal at least while the main transceiver is in the ultra-deep sleep power state.

### (Supplementary Note 46)

A radio access network (RAN) node comprising:
means for transmitting configuration information to a radio terminal, wherein the configuration information indicates that a comparison of a first measured value obtained from a Synchronization Signal (SS)/Physical Broadcast Channel (PBCH) block (SSB) measurement with a first threshold is to be skipped in determining whether a condition for initiating a Small Data Transmission (SDT) procedure is satisfied.

### (Supplementary Note 47)

The RAN node according to Supplementary Note 46, wherein the configuration information causes the radio terminal to perform the SDT procedure using the main transceiver that has woken up from an ultra-deep sleep power state by skipping the comparison of the first measured value with the first threshold.

### (Supplementary Note 48)

The RAN node according to Supplementary Note 46 or 47, further comprising means for transmitting configuration information indicating a second threshold to the radio terminal,
wherein the second threshold causes the radio terminal to perform a comparison of a second measured value obtained from a measurement of a low-power wake-up-related signal using a low-power wake-up receiver with the second threshold, to determine whether the condition for initiating the SDT procedure is satisfied.

### (Supplementary Note 49)

The RAN node further according to any of Supplementary Notes 46 to 48, further comprising means for transmitting configuration information indicating a third threshold to the wireless terminal,
wherein the third threshold is used to select, in a random access resource selection, an SSB or a Physical Random Access Channel (PRACH) occasion based on a second measured value obtained from a measurement of a low-power wake-up-related signal using a low-power wake-up receiver of the radio terminal.

### (Supplementary Note 50)

A method performed by a radio terminal equipped with a main transceiver and a low-power wake-up receiver, the method comprising:
performing a Small Data Transmission (SDT) procedure using the main transceiver that has woken up from an ultra-deep sleep power state, by skipping a comparison of a first measured value obtained from a Synchronization Signal (SS)/Physical Broadcast Channel (PBCH) block (SSB) measurement with a first threshold.

### (Supplementary Note 51)

A method performed by a radio access network (RAN) node, the method comprising:
transmitting configuration information to a radio terminal, wherein the configuration information indicates that a comparison of a first measured value obtained from a Synchronization Signal (SS)/Physical Broadcast Channel (PBCH) block (SSB) measurement with a first threshold is to be skipped in determining whether a condition for initiating a Small Data Transmission (SDT) procedure is satisfied.

### (Supplementary Note 52)

A program for causing a computer to perform a method for a radio terminal equipped with a main transceiver and a low-power wake-up receiver, the method comprising:
performing a Small Data Transmission (SDT) procedure using the main transceiver that has woken up from an ultra-deep sleep power state, by skipping a comparison of a first measured value obtained from a Synchronization Signal (SS)/Physical Broadcast Channel (PBCH) block (SSB) measurement with a first threshold.

### (Supplementary Note 53)

A program for causing a computer to perform a method for a radio access network (RAN) node, the method comprising:
transmitting configuration information to a radio terminal, wherein the configuration information indicates that a comparison of a first measured value obtained from a Synchronization Signal (SS)/Physical Broadcast Channel (PBCH) block (SSB) measurement with a first threshold is to be skipped in determining whether a condition for initiating a Small Data Transmission (SDT) procedure is satisfied.

### (Supplementary Note 54)

A radio terminal comprising:
a main transceiver;
a low-power wake-up receiver; and
means for attempting to measure or detect a low-power wake-up-related signal of a neighbor cell supporting an intended network slice, if quality of a low-power wake-up-related signal in a serving cell, or in a serving cell frequency, measured using the low-power wake-up receiver deteriorates while the main transceiver is in an ultra-deep sleep power state.

### (Supplementary Note 55)

The radio terminal according to Supplementary Note 54, further comprising means for waking up the main transceiver and initiating cell reselection that utilizes a Synchronization Signal (SS)/Physical Broadcast Channel (PBCH) block measurement using the main transceiver, if quality of the low-power wake-up-related signal of the neighbor cell supporting the intended network slice is insufficient or if no neighbor cell supporting the intended network slice is detected.

### (Supplementary Note 56)

The radio terminal according to Supplementary Note 54 or 55, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

### (Supplementary Note 57)

The radio terminal according to any one of Supplementary Notes 54 to 56, wherein the neighbor cell supporting the intended network slice is a cell supporting a Network Slice Access Stratum AS Group (NSAG) that includes an intended Single Network Slice Selection Assistance Information (S-NSSAI).

### (Supplementary Note 58)

A method performed by a radio terminal equipped with a main transceiver and a low-power wake-up receiver, the method comprising:
attempting to measure or detect a low-power wake-up-related signal of a neighbor cell supporting an intended network slice, if quality of a low-power wake-up-related signal in a serving cell, or in a serving cell frequency, measured using the low-power wake-up receiver deteriorates while the main transceiver is in an ultra-deep sleep power state.

### (Supplementary Note 59)

A program for causing a computer to perform a method for a radio terminal equipped with a main transceiver and a low-power wake-up receiver, the method comprising:
attempting to measure or detect a low-power wake-up-related signal of a neighbor cell supporting an intended network slice, if quality of a low-power wake-up-related signal in a serving cell, or in a serving cell frequency, measured using the low-power wake-up receiver deteriorates while the main transceiver is in an ultra-deep sleep power state.

### (Supplementary Note 60)

A radio terminal comprising:
a main transceiver;
a low-power wake-up receiver; and
means for, if there is a frequency with higher priority in cell reselection than a serving cell frequency, attempting to measure or detect a low-power wake-up-related signal of a neighbor cell supporting an intended network slice, in the higher-priority frequency, using the low-power wake-up receiver, while the main transceiver is in an ultra-deep sleep power state.

### (Supplementary Note 61)

The radio terminal according to Supplementary Note 60, further comprising means for waking up the main transceiver and initiating cell reselection that utilizes a Synchronization Signal (SS)/Physical Broadcast Channel (PBCH) block measurement using the main transceiver, if quality of the low-power wake-up-related signal of the neighbor cell supporting the intended network slice is insufficient or if no neighbor cell supporting the intended network slice is detected.

### (Supplementary Note 62)

The radio terminal according to Supplementary Note 60 or 61, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

### (Supplementary Note 63)

The radio terminal according to any one of Supplementary Notes 60 to 62, wherein the neighbor cell supporting the intended network slice is a cell supporting a Network Slice Access Stratum AS Group (NSAG) that includes an intended Single Network Slice Selection Assistance Information (S-NSSAI).

### (Supplementary Note 64)

A method performed by a radio terminal equipped with a main transceiver and a low-power wake-up receiver, the method comprising:
if there is a frequency with higher priority in cell reselection than a serving cell frequency, attempting to measure or detect a low-power wake-up-related signal of a neighbor cell supporting an intended network slice, in the higher-priority frequency, using the low-power wake-up receiver, while the main transceiver is in an ultra-deep sleep power state.

### (Supplementary Note 65)

A program for causing a computer to perform a method for a radio terminal equipped with a main transceiver and a low-power wake-up receiver, the method comprising:
if there is a frequency with higher priority in cell reselection than a serving cell frequency, attempting to measure or detect a low-power wake-up-related signal of a neighbor cell supporting an intended network slice, in the higher-priority frequency, using the low-power wake-up receiver, while the main transceiver is in an ultra-deep sleep power state.

This application is based upon and claims the benefit of priority from Japanese Patent Application No. 2023-139771, filed on August 30, 2023, the disclosure of which is incorporated herein in its entirety by reference.

### Reference Signs List

- 1: User Equipment (UE)
- 2: gNB
- 11: Main Radio (MR)
- 12: Low Power Wake-up Radio (LR)
- 21: Cell
- 2103: Baseband processor
- 2104: Application processor
- 2106: Memory
- 2107: Modules
- 2204: Processor
- 2205: Memory
- 2206: Modules

## Claims

1. A radio terminal comprising:
a main transceiver;
a low-power wake-up receiver; and
means for recording Minimization of Drive Tests (MDT) measurement results, including measurement results of a low-power wake-up-related signal obtained using the low-power wake-up receiver, at least while the main transceiver is in an ultra-deep sleep power state.

2. The radio terminal according to claim 1, wherein the means for recording is adapted to record a measurement result of the low-power wake-up-related signal either or both at a time of the main transceiver entering the ultra-deep sleep power state and at a time of the main transceiver waking up from the ultra-deep sleep power state.

3. The radio terminal according to claim 1 or 2, further comprising means for explicitly indicating, in a report of the MDT measurement results to a network, that the MDT measurement results relate to measurements of the low-power wake-up-related signal.

4. The radio terminal according to any one of claims 1 to 3, further comprising means for receiving from a network an MDT measurement configuration including a configuration or indication of measurement logging of the low-power wake-up-related signal,
wherein the means for recording is adapted to record measurement results of the low-power wake-up-related signal in response to receiving the MDT measurement configuration.

5. The radio terminal according to any one of claims 1 to 4, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

6. The radio terminal according to any one of claims 1 to 5, wherein the means for recording is adapted to record for MDT, in addition to measurement results of the low-power wake-up-related signal, measurement results of a Synchronization Signal (SS)/Physical Broadcast Channel (PBCH) block (SSB).

7. The radio terminal according to any one of claims 1 to 6, wherein the MDT is a Logged MDT.

8. A radio access network (RAN) node comprising:
means for transmitting to a radio terminal a Minimization of Drive Tests (MDT) measurement configuration including a configuration or indication of measurement logging of a low-power wake-up-related signal.

9. The RAN node according to claim 8, wherein the MDT measurement configuration causes the radio terminal to record MDT measurement results, including measurement results of the low-power wake-up-related signal obtained using a low-power wake-up receiver of the radio terminal, at least while a main transceiver of the radio terminal is in an ultra-deep sleep power state.

10. The RAN node according to claim 9, wherein the MDT measurement configuration causes the radio terminal to record a measurement result of the low-power wake-up-related signal either or both at a time of the main transceiver entering the ultra-deep sleep power state and at a time of the main transceiver waking up from the ultra-deep sleep power state.

11. The RAN node according to claim 9 or 10, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

12. The RAN node according to any one of claims 8 to 11, wherein the MDT measurement results include, in addition to measurement results of the low-power wake-up-related signal, measurement results of a Synchronization Signal (SS)/Physical Broadcast Channel (PBCH) block (SSB).

13. The RAN node according to any one of claims 8 to 12, wherein the MDT is a Logged MDT.

14. A method performed by a radio terminal, the method comprising:
recording Minimization of Drive Tests (MDT) measurement results, including measurement results of a low-power wake-up-related signal obtained using a low-power wake-up receiver, at least while a main transceiver is in an ultra-deep sleep power state.

15. A method performed by a radio access network (RAN) node, the method comprising:
transmitting to a radio terminal a Minimization of Drive Tests (MDT) measurement configuration including a configuration of measurement logging of a low-power wake-up-related signal.

16. A program for causing a computer to perform a method for a radio terminal, the method comprising:
recording Minimization of Drive Tests (MDT) measurement results, including measurement results of a low-power wake-up-related signal obtained using a low-power wake-up receiver, at least while a main transceiver is in an ultra-deep sleep power state.

17. A program for causing a computer to perform a method for a radio access network (RAN) node, the method comprising:
transmitting to a radio terminal a Minimization of Drive Tests (MDT) measurement configuration including a configuration of measurement logging of a low-power wake-up-related signal.

18. A radio terminal comprising:
a main transceiver;
a low-power wake-up receiver; and
means for storing measurement results for IDLE/INACTIVE measurement reporting, including measurement results of a low-power wake-up-related signal obtained using the low-power wake-up receiver, at least while the main transceiver is in an ultra-deep sleep power state.

19. The radio terminal according to claim 18, further comprising means for explicitly indicating, in the IDLE/INACTIVE measurement reporting to a network, that the measurement results for the IDLE/INACTIVE measurement reporting relate to measurements of the low-power wake-up-related signal.

20. The radio terminal according to claim 18 or 19, further comprising means for receiving information from a network indicating that IDLE/INACTIVE measurements include measurements of the low-power wake-up-related signal,
wherein the means for storing is adapted to store measurement results of the low-power wake-up-related signal in response to receiving the information.

21. The radio terminal according to claim 20, wherein the means for receiving is configured to receive the information via a Radio Resource Control (RRC) message dedicated to the radio terminal, or via common system information in a cell.

22. The radio terminal according to claim 20, wherein the means for receiving is configured to receive the information via an RRCRelease message.

23. The radio terminal according to claim 20, wherein the means for receiving is configured to receive the information via System Information Block type 1 (SIB1) or SIB type 11 (SIB11).

24. The radio terminal according to any one of claims 18 to 23, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

25. A radio access network (RAN) node comprising:
means for transmitting information to a radio terminal indicating that IDLE/INACTIVE measurements include measurements of a low-power wake-up-related signal.

26. The RAN node according to claim 25, wherein the information causes the radio terminal to store measurement results for IDLE/INACTIVE measurement reporting, including measurement results of the low-power wake-up-related signal obtained using a low-power wake-up receiver of the radio terminal, at least while a main transceiver of the radio terminal is in an ultra-deep sleep power state.

27. The RAN node according to claim 25 or 26, wherein the means for transmitting is configured to transmit the information to the radio terminal via a Radio Resource Control (RRC) message dedicated to the radio terminal, or via common system information within a cell.

28. The RAN node according to claim 25 or 26, wherein the means for transmitting is configured to transmit the information via an RRC Release message.

29. The RAN node according to claim 25 or 26, wherein the means for transmitting is configured to transmit the information via System Information Block type 1 (SIB1) or SIB type 11 (SIB11).

30. The RAN node according to claim 26, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

31. A method performed by a radio terminal, the method comprising:
storing measurement results for IDLE/INACTIVE measurement reporting, including measurement results of a low-power wake-up-related signal obtained using a low-power wake-up receiver, at least while a main transceiver is in an ultra-deep sleep power state.

32. A method performed by a radio access network (RAN) node, the method comprising:
transmitting information to a radio terminal indicating that a low-power wake-up-related signal is subject to IDLE/INACTIVE measurements.

33. A program for causing a computer to perform a method for a radio terminal, the method comprising:
storing measurement results for IDLE/INACTIVE measurement reporting, including measurement results of a low-power wake-up-related signal obtained using a low-power wake-up receiver, at least while a main transceiver is in an ultra-deep sleep power state.

34. A program for causing a computer to perform a method for a radio access network (RAN) node, the method comprising:
transmitting information to a radio terminal indicating that a low-power wake-up-related signal is subject to IDLE/INACTIVE measurements.

35. A radio terminal comprising:
a main transceiver;
a low-power wake-up receiver; and
means for performing a Small Data Transmission (SDT) procedure using the main transceiver that has woken up from an ultra-deep sleep power state, by skipping a comparison of a first measured value obtained from a Synchronization Signal (SS)/Physical Broadcast Channel (PBCH) block (SSB) measurement with a first threshold.

36. The radio terminal according to claim 35, wherein the means for performing is adapted to perform a comparison of a second measured value obtained from a measurement of a low-power wake-up-related signal using the low-power wake-up receiver with a second threshold, to determine whether a condition for initiating the SDT procedure is satisfied.

37. The radio terminal according to claim 36, further comprising means for receiving first configuration information indicating the second threshold from a network.

38. The radio terminal according to any one of claims 35 to 37, further comprising means for skipping a comparison of the first measured value with a threshold for an SSB selection in a random access resource selection.

39. The radio terminal according to claim 38, further comprising means for selecting, in the random access resource selection, an SSB or Physical Random Access Channel (PRACH) occasion based on a second measured value obtained from a measurement of a low-power wake-up-related signal using the low-power wake-up receiver.

40. The radio terminal according to claim 39, further comprising means for receiving, from a network, second configuration information indicating a mapping of a plurality of beams of the SSB, or a plurality of random access occasions, to a plurality of beams of the low-power wake-up-related signal.

41. The radio terminal according to claim 38, further comprising means for selecting any SSB in the random access resource selection.

42. The radio terminal according to any one of claims 35 to 41, further comprising means for receiving third configuration information indicating that the comparison of the first measured value with the first threshold value is to be skipped,
wherein the means for initiating is adapted to skip the comparison of the first measured value with the first threshold value in response to receiving the third configuration information.

43. The radio terminal according to any one of claims 35 to 42, further comprising means for waking up the main transceiver in response to receiving, from a Non-Access Stratum (NAS) layer, uplink data to be transmitted over a radio bearer with SDT enabled.

44. The radio terminal according to any one of claims 35 to 43, wherein the SDT procedure is a procedure that enables the radio terminal to transmit data or signaling while remaining in an RRC_INACTIVE state without transitioning to an RRC_CONNECTED state.

45. The radio terminal according to any one of claims 35 to 44, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving a low-power wake-up-related signal, and
the low-power wake-up receiver is used to receive the low-power wake-up-related signal at least while the main transceiver is in the ultra-deep sleep power state.

46. A radio access network (RAN) node comprising:
means for transmitting, to a radio terminal, configuration information indicating that a comparison of a first measured value obtained from a Synchronization Signal (SS)/Physical Broadcast Channel (PBCH) block (SSB) measurement with a first threshold is to be skipped in determining whether a condition for initiating a Small Data Transmission (SDT) procedure is satisfied.

47. The RAN node according to claim 46, wherein the configuration information causes the radio terminal to perform the SDT procedure using the main transceiver that has woken up from an ultra-deep sleep power state by skipping the comparison of the first measured value with the first threshold.

48. The RAN node according to claim 46 or 47, further comprising means for transmitting configuration information indicating a second threshold to the radio terminal,
wherein the second threshold causes the radio terminal to perform a comparison of a second measured value obtained from a measurement of a low-power wake-up-related signal using a low-power wake-up receiver with the second threshold, to determine whether the condition for initiating the SDT procedure is satisfied.

49. The RAN node further according to any of claims 46 to 48, further comprising means for transmitting configuration information indicating a third threshold to the wireless terminal,
wherein the third threshold is used to select, in a random access resource selection, an SSB or a Physical Random Access Channel (PRACH) occasion based on a second measured value obtained from a measurement of a low-power wake-up-related signal using a low-power wake-up receiver of the radio terminal.

50. A method performed by a radio terminal equipped with a main transceiver and a low-power wake-up receiver, the method comprising:
performing a Small Data Transmission (SDT) procedure using the main transceiver that has woken up from an ultra-deep sleep power state, by skipping a comparison of a first measured value obtained from a Synchronization Signal (SS)/Physical Broadcast Channel (PBCH) block (SSB) measurement with a first threshold.

51. A method performed by a radio access network (RAN) node, the method comprising:
transmitting, to a radio terminal, configuration information indicating that a comparison of a first measured value obtained from a Synchronization Signal (SS)/Physical Broadcast Channel (PBCH) block (SSB) measurement with a first threshold is to be skipped in determining whether a condition for initiating a Small Data Transmission (SDT) procedure is satisfied.

52. A program for causing a computer to perform a method for a radio terminal equipped with a main transceiver and a low-power wake-up receiver, the method comprising:
performing a Small Data Transmission (SDT) procedure using the main transceiver that has woken up from an ultra-deep sleep power state, by skipping a comparison of a first measured value obtained from a Synchronization Signal (SS)/Physical Broadcast Channel (PBCH) block (SSB) measurement with a first threshold.

53. A program for causing a computer to perform a method for a radio access network (RAN) node, the method comprising:
transmitting, to a radio terminal, configuration information indicating that a comparison of a first measured value obtained from a Synchronization Signal (SS)/Physical Broadcast Channel (PBCH) block (SSB) measurement with a first threshold is to be skipped in determining whether a condition for initiating a Small Data Transmission (SDT) procedure is satisfied.

54. A radio terminal comprising:
a main transceiver;
a low-power wake-up receiver; and
means for attempting to measure or detect a low-power wake-up-related signal of a neighbor cell supporting an intended network slice, if quality of a low-power wake-up-related signal in a serving cell, or in a serving cell frequency, measured using the low-power wake-up receiver deteriorates while the main transceiver is in an ultra-deep sleep power state.

55. The radio terminal according to claim 54, further comprising means for waking up the main transceiver and initiating cell reselection that utilizes a Synchronization Signal (SS)/Physical Broadcast Channel (PBCH) block measurement using the main transceiver, if quality of the low-power wake-up-related signal of the neighbor cell supporting the intended network slice is insufficient or if no neighbor cell supporting the intended network slice is detected.

56. The radio terminal according to claim 54 or 55, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

57. The radio terminal according to any one of claims 54 to 56, wherein the neighbor cell supporting the intended network slice is a cell supporting a Network Slice Access Stratum AS Group (NSAG) that includes an intended Single Network Slice Selection Assistance Information (S-NSSAI).

58. A method performed by a radio terminal equipped with a main transceiver and a low-power wake-up receiver, the method comprising:
attempting to measure or detect a low-power wake-up-related signal of a neighbor cell supporting an intended network slice, if quality of a low-power wake-up-related signal in a serving cell, or in a serving cell frequency, measured using the low-power wake-up receiver deteriorates while the main transceiver is in an ultra-deep sleep power state.

59. A program for causing a computer to perform a method for a radio terminal equipped with a main transceiver and a low-power wake-up receiver, the method comprising:
attempting to measure or detect a low-power wake-up-related signal of a neighbor cell supporting an intended network slice, if quality of a low-power wake-up-related signal in a serving cell, or in a serving cell frequency, measured using the low-power wake-up receiver deteriorates while the main transceiver is in an ultra-deep sleep power state.

60. A radio terminal comprising:
a main transceiver;
a low-power wake-up receiver; and
means for, if there is a frequency with higher priority in cell reselection than a serving cell frequency, attempting to measure or detect a low-power wake-up-related signal of a neighbor cell supporting an intended network slice, in the higher-priority frequency, using the low-power wake-up receiver, while the main transceiver is in an ultra-deep sleep power state.

61. The radio terminal according to claim 60, further comprising means for waking up the main transceiver and initiating cell reselection that utilizes a Synchronization Signal (SS)/Physical Broadcast Channel (PBCH) block measurement using the main transceiver, if quality of the low-power wake-up-related signal of the neighbor cell supporting the intended network slice is insufficient or if no neighbor cell supporting the intended network slice is detected.

62. The radio terminal according to claim 60 or 61, wherein:
the main transceiver is used for signal transmission and reception, including Physical Uplink Control Channel (PUCCH) transmission, Physical Uplink Shared Channel (PUSCH) transmission, Physical Downlink Control Channel (PDCCH) reception, and Physical Downlink Shared Channel (PDSCH) reception,
the main transceiver is not used for receiving the low-power wake-up-related signal, and
the low-power wake-up receiver is used to receive the low-power wake-up-related signal at least while the main transceiver is in the ultra-deep sleep power state.

63. The radio terminal according to any one of claims 60 to 62, wherein the neighbor cell supporting the intended network slice is a cell supporting a Network Slice Access Stratum AS Group (NSAG) that includes an intended Single Network Slice Selection Assistance Information (S-NSSAI).

64. A method performed by a radio terminal equipped with a main transceiver and a low-power wake-up receiver, the method comprising:
if there is a frequency with higher priority in cell reselection than a serving cell frequency, attempting to measure or detect a low-power wake-up-related signal of a neighbor cell supporting an intended network slice, in the higher-priority frequency, using the low-power wake-up receiver, while the main transceiver is in an ultra-deep sleep power state.

65. A program for causing a computer to perform a method for a radio terminal equipped with a main transceiver and a low-power wake-up receiver, the method comprising:
if there is a frequency with higher priority in cell reselection than a serving cell frequency, attempting to measure or detect a low-power wake-up-related signal of a neighbor cell supporting an intended network slice, in the higher-priority frequency, using the low-power wake-up receiver, while the main transceiver is in an ultra-deep sleep power state.
